**Europäisches Patentamt**

**European Patent Office**

**Office européen des brevets**

(11) Publication number: **0 161 068**
**B1**

(12) **EUROPEAN PATENT SPECIFICATION**

(45) Date of publication of patent specification: **25.07.90**

(51) Int. Cl.⁵: **G 01 G 19/32, G 01 G 23/37**

(21) Application number: **85302419.8**

(22) Date of filing: **04.04.85**

(54) **Computerised weighing apparatus of combinatorial weighing type.**

(30) Priority: **05.04.84 JP 68288/84**
**05.04.84 JP 68289/84**
**05.04.84 JP 68290/84**

(43) Date of publication of application:
**13.11.85 Bulletin 85/46**

(45) Publication of the grant of the patent:
**25.07.90 Bulletin 90/30**

(84) Designated Contracting States:
**DE FR GB IT**

(56) References cited:
**EP-A-0 074 260**
**EP-A-0 085 446**
**EP-A-0 132 108**
**GB-A-2 097 207**

(73) Proprietor: **ISHIDA SCALES MFG. CO. LTD.**
**44, Shogoin Sannou-cho Sakyo-ku**
**Kyoto-shi Kyoto (JP)**

(72) Inventor: **Sashiki, Takashi**
**10-46, Babamibashiri**
**Nagaokakyo-shi Kyoto (JP)**
Inventor: **Nakagawa, Yukio Inperiaru**
**Higashiokazaki 302**
**32, Higashitennou-cho Okazaki**
**Sakyo-ku Kyoto-shi Kyoto (JP)**

(74) Representative: **Fane, Christopher Robin King**
**et al**
**HASELTINE LAKE & CO. Hazlitt House 28**
**Southampton Buildings Chancery Lane**
**London, WC2A 1AT (GB)**

Courier Press, Leamington Spa, England.

# EP 0 161 068 B1

**Description**

The present invention relates to a computerized weighing apparatus of combinatorial weighing type.

A combinational weighing type computerized weighing apparatus is known from EP—A—0074260 and is operable to provide a quantity of articles, having a total combined weight value equal to a target weight value or closest to the target weight value, by supplying articles to be weighed to respective weighing hoppers of a plurality of weighing machines, weighing the articles which have been dispensed to the weighing machines, computing combinations of the weight values obtained on the basis of the respective weight data provided by the weighing machines, selecting a combination of weighing machines (which will sometimes be referred to hereinafter as an acceptable or "optimum" combination) that gives a total combined weight value equal or closest to the target weight value within preset allowable limits and opening only the weighing hoppers of the weighing machines providing the "optimum" combination.

In the computerized weighing apparatus thus proposed, the weighing hoppers corresponding to the weighing machines of the "optimum" combination, which hoppers have discharged their articles, are supplied with articles for the next weighing cycle from pool hoppers which are arranged above the weighing hoppers, whereafter a dispersing feeder disperses fresh articles to supply them to the emptied pool hoppers.

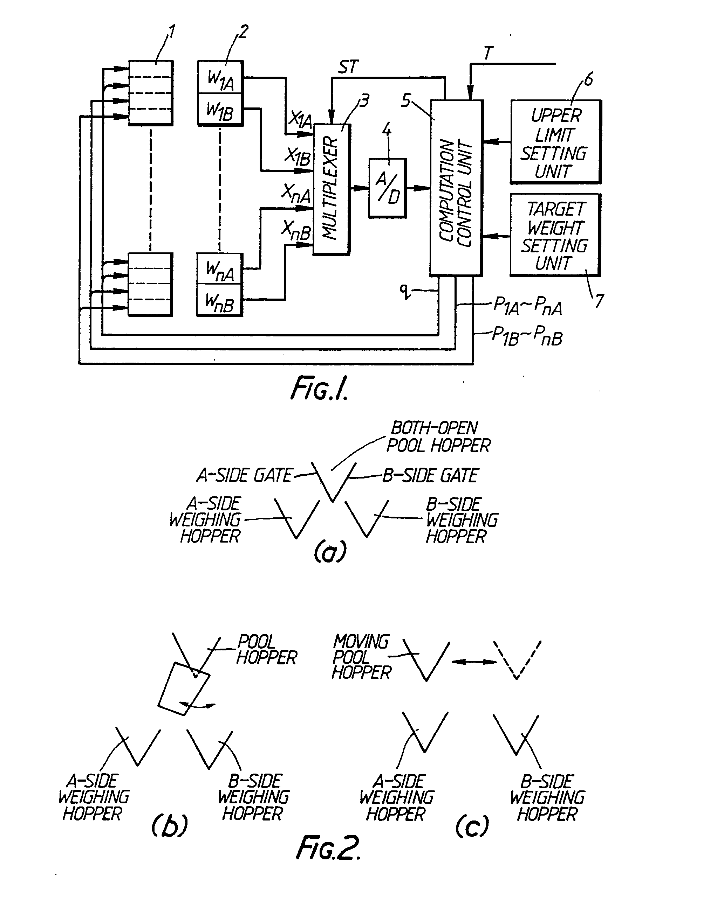

Figure 1 of the accompanying drawings is a block diagram showing the schematic construction of an example of the type of computerized weighing apparatus mentioned above. When, in this weighing apparatus, a timing signal T is delivered from a packaging machine (not shown) to a computation control unit 5 comprising a microcomputer and so on, this computation control unit 5 feeds a start signal ST to a multiplexer 3 so that this multiplexer 3 introduces the weight value data $X_{1A}$ to $X_{nB}$ (analog values) of a plurality of weighing machines 2 into an A/D converter 4. In accordance with the weight value data which have been converted into digital values and fed to the computation control unit 5, this unit 5 computes combinations of the weight value data on the basis of preformed combination patterns and compares the computed combinational weight values with the target weight value, which has been set by a target weight setting unit 7, to select the "optimum" combination of weighing machines, until it feeds operation signals to a drive unit 1 for driving the hoppers of the weighing machines providing the "optimum" combination. At this time, the weight values to be selected for the "optimum" combination are smaller than an upper weight limit which is preset by an upper limit setting unit 6.

Various possible relationships between the weighing hoppers belonging to the weighing machines and the pool hoppers for supplying weighing hoppers with articles will now be described with reference to Figures 2(a), (b) and (c) of the accompanying drawings. In the construction shown in Figure 2(a), an A-side weighing hopper and a B-side weighing hopper are arranged below the A- and B-side gates of a both-open pool hopper, respectively, so that the A-side hopper is supplied with the articles when the A-side gate, for example, of the pool hopper is opened. In the construction shown in Figure 2(b), a dispersing chute is arranged below the pool hoppers so that it is shaken to the right and left to disperse and supply the articles to the A- and B-side weighing hoppers. In the construction shown in Figure 2(c), on the other hand, a moving pool hopper is provided which is movable to the right and left to supply the articles to the A- and B-side weighing hoppers. An example of the Fig. 2(c) construction is shown in EP—A—0132108 (Art. 54(3) and (4) — published 23 January 1985).

Returning to Figure 1, the signals to be delivered from the computation control unit 5 to the hopper drive unit 1 are classified, in the construction of Figure 2(a), into signals $P_{1A}$ to $P_{nA}$ for opening the A-side gates of the pool hoppers, signals $P_{1B}$ to $P_{nB}$ for opening the B-side gates of the same, and a signal q for opening the weighing hoppers. The weighing machines 2 are paired and arranged such that six pairs of twelve machines, $W_{1A}$, $W_{1B}$ to $W_{nA}$, $W_{nB}$ for example, are equidistantly arranged in a circular or straight array.

Any of the afore-mentioned types of weighing machine is liable to a shift in its zero point, owing to the ambient temperature or aging. This shift makes a zero-point adjustment of the weighing machines necessary.

In the prior art, it is difficult to judge quantitatively what shift of the zero point is appropriate in view of the conditions under which the weighing machine is used, and how long the machine is used. This makes it impossible to execute the zero-point adjustment rationally.

Computerized weighing apparatus having two weighing hoppers arranged for each pool hopper, as shown in Figures 2(a), (b) or (c), has an advantage in that two items of weight value data are obtained per pool hopper. Contrary to this advantage, the computerized weighing apparatus has a problem in that, in the case where the two weighing machines belonging to a pair are both selected to form part of the "optimum" combination (which case will be referred to hereafter as a "doubling discharge"), fresh articles to be weighed cannot be supplied to both emptied weighing hoppers before the subsequent two weighing cycles. Because of this problem, the number of weighing machines available to participate in the next combinatorial weighing cycle is reduced, thereby reducing the number of combinations possible and so decreasing combinatorial weighing accuracy. If doubling discharge is wholly prohibited, in order to avoid the afore-mentioned problem, a further problem can arise in that the choice of certain combinations as the "optimum" combination is thus prohibited, and to obviate such restriction in choice the number of weighing machines provided in the apparatus has to be increased. If one weighing machine belonging to

2

one pair and replenished with articles after a doubling discharge is continuously selected for successive "optimum" combinations, the computerized weighing apparatus can also suffer from another problem in that the restoring operation of replenishing the emptied weighing hopper with fresh articles is elongated, which has the effect of further decreasing combinatorial weighing accuracy.

According to the present invention there is provided a computerised combinatorial weighing apparatus, for carrying out repeatedly a weighing cycle for providing respective selected quantities of articles, which apparatus comprises: a plurality of weighing machines, for holding articles being weighed; supply means for temporarily holding articles to be weighed and delivering respective batches of such articles to the said weighing machines; and a combination control unit for combining, in each weighing cycle, respective batch weight measures, provided by a group of the said weighing machines, to select an acceptable combination of such weighing machines holding a total combined weight of articles equal or closest to a preselected target weight, and bringing about discharge of the batches of articles from those weighing machines belonging to the said acceptable combination, thereby to obtain the required selected quantity of articles; the combination control unit being operable, after the weighing machines belonging to the selected acceptable combination have discharged their respective batches of articles, to bring about a zero-point adjustment, in the next weighing cycle, of a selected one of the weighing machines of that selected acceptable combination, which weighing machine is thereby excluded from the group of weighing machines to be used by the combination control unit in that next weighing cycle;

characterised in that the said supply means comprise a set of pool hoppers, associated respectively with individual pairs of the said weighing machines and each operable to deliver a batch of such articles selectively to either one of the weighing machines of the pair concerned, and further characterised in that the said combination control unit is such that every possible combination of weighing machines that includes more than one of the said individual pairs thereof is excluded from selection in a weighing cycle as the said acceptable combination, and if the acceptable combination selected in a weighing cycle includes one of the said individual pairs the weighing machine selected for zero-point adjustment in the next weighing cycle is one of the weighing machines of that pair.

Computerised combinatorial weighing apparatus, for carrying out repeatedly a weighing cycle for providing respective selected quantities of articles, is known from GB—A—2097207. The known apparatus comprises: a plurality of weighing machines, for holding articles being weighed; supply means for temporarily holding articles to be weighed and delivering batches of such articles respectively to the said weighing machines; and a combination control unit for combining, in each weighing cycle, respective batch weight measures, provided by a group of the said weighing machines, to select an acceptable combination of such weighing machines holding a total combined weight of articles equal or closest to a preselected target weight, and bringing about discharge of the batches of articles from those weighing machines belonging to the said acceptable combination, thereby to obtain the required selected quantity of articles; the combination control unit being operable, after the weighing machines belonging to the selected acceptable combination have discharged their respective batches of articles, to bring about a zero-point adjustment, in the next weighing cycle, of a selected one of the weighing machines of that selected acceptable combination, which weighing machine is thereby excluded from the group of weighing machines to be used by the combination control unit in that next weighing cycle. However, GB—A—2097207 determines which weighing machine is to undergo zero-point adjustment by employing a counter to count the number of times each weighing machine discharges its articles; that document is not in any way concerned with an arrangement in which one pool hopper serves two weighing hoppers and, accordingly, does not appreciate the problem of doubling discharge.

Computerised combinatorial weighing apparatus, for carrying out repeatedly a weighing cycle for providing respective selected quantities of articles, is also known from EP—A—0085446. The known apparatus comprises: a plurality of weighing machines, for holding articles being weighed, associated respectively with individual pairs of storage hoppers and each operable to deliver a batch of weighed articles selectively to either one of the storage hoppers of the pair associated with the weighing machine concerned; and a combination control unit for combining, in each weighing cycle, respective batch weight measures, provided by a group of the said storage hoppers, to select an acceptable combination of such storage hoppers holding a total combined weight of articles equal or closest to a preselected target weight, and bringing about discharge of the batches of articles from those storage hoppers belonging to the said acceptable combination, thereby to obtain the required selected quantity of articles. However, this document is not in any way concerned with zero-point adjustment, and, furthermore, does not suggest that individual pairs of weighing machines could be supplied with articles by respective pool hoppers in the manner contemplated by the present invention.

It should be noted that the applicants' prior publication EP—A—0132108 (mentioned above) proposes apparatus in which one weighing machine of a selected pair is subjected to a zero-point adjustment while the other is being re-loaded; EP—A—0132108 does not, however, disclose that the acceptable combination must be chosen from those combinations including no more than one pair of weighing machines.

Reference will now be made, by way of example, to the accompanying drawings, in which:

Figure 1 (described above) is a block diagram showing schematically computerized combinational weighing apparatus;

Figures 2(a), (b) and (c) (described above) are explanatory views showing various possible constructional relationships between pool hoppers and the weighing hoppers;

Figures 3(a) to (f) and Figures 7(a) to (d) are explanatory diagrams showing the operations of respective first and second embodiments of the present invention;

Figures 4(a) and (b) are diagrams for explaining the combination patterns of the first embodiment;

Figures 5(a) to (f) are diagrams showing the constructions of memories;

Figures 6 and 8 are flow charts showing the operation of the first and second embodiments;

Figures 9 and 10 are diagrams for explaining the characteristics of first to third embodiments;

Figures 11(a) to (c) are diagrams for explaining the operations of a fourth embodiment of the present invention;

Figure 12 is a flow chart showing the operations of the fourth embodiment of the present invention;

Figures 13 and 14 are diagrams summarising the characteristics of the fourth embodiment of the present invention;

Figures 15(a) to (i) and Figures 18(a) to (f) are explanatory diagrams showing the operations of respective fifth and sixth embodiments of the present invention;

Figures 16(a) to (g) are diagrams showing the construction of memories;

Figure 17 is a flow chart showing the operations of the fifth embodiment; and

Figures 19 and 20 are diagrams summarising the characteristics of the fifth and sixth embodiments.

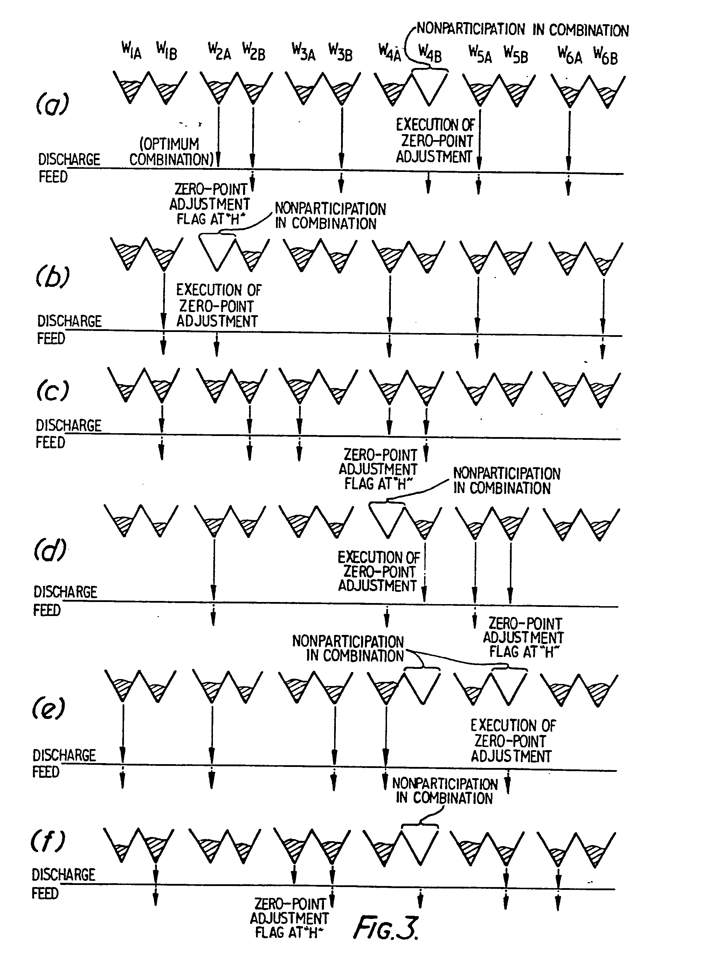

Figures 3 to 10 will now be referred to for the purpose of explaining first, second and third embodiments of the present invention.

Figure 3 is a diagram illustrating zero-point adjustments of weighing machines in the first embodiment, where the "optimum" combination is selected from only either a combination pattern without the doubling, in which each of its pairs is composed of only one weighing machine, or a combination pattern with the doubling, in which only one of its pairs is composed of two weighing machines. The following description is directed to an example in which the twelve weighing machines $W_{1A}$ to $W_{6B}$ are grouped into six pairs. Figure 3(a) shows an example, in which eleven of the weighing machines, except the machine $W_{4B}$, are made to participate in the calculated combinations while the non-participating machine $W_{4B}$ is subjected to a zero-point adjustment. Since, in this example, both the weighing machines $W_{2A}$ and $W_{2B}$ belonging to a pair are selected for the "optimum" combination, the computation control unit 5 sets a zero-point adjustment flag of the weighing machine $W_{2A}$ at "H", when it selects the "optimum" combination, so that the weighing machine $W_{2A}$ may be left non-participating in the next cycle, during which it may be subjected to a zero-point adjustment.

The computation control unit 5 selects, in this example, the five weighing machines $W_{2A}$, $W_{2B}$, $W_{3B}$, $W_{5A}$ and $W_{6A}$ for the "optimum" combination and causes them to discharge their respective articles. In other words, this example exemplifies a one-pair doubling because both the two weighing machines $W_{2A}$ and $W_{2B}$ belonging to the common pair are selected in the "optimum" combination and discharge their articles. Of the weighing machines from which the articles have been discharged, moreover, the four weighing machines $W_{2B}$, $W_{3B}$, $W_{5A}$, and $W_{6A}$ (but not the machine $W_{2A}$ which is to be subjected to a zero-point adjustment in the subsequent cycle) and the weighing machine $W_{4B}$, which has been subjected to a zero-point adjustment in the present cycle, are replenished with articles. Figure 3(b) shows the operations of the weighing machines which are executed subsequently to the operations of Figure 3(a). In the example shown in Figure 3(b), the weighing machine $W_{2A}$, which has been set in the preceding cycle with its zero-point adjustment flag at "H", is not caused to participate in selection of combinations in the present cycle but is subjected to a zero-point adjustment. This example is one without doubling, because, of the eleven participating weighing machines, four unpaired weighing machines $W_{1B}$, $W_{4A}$, $W_{5A}$ and $W_{6B}$ are selected for the "optimum" combination. The weighing machines $W_{1B}$, $W_{4A}$, $W_{5A}$ and $W_{6B}$ which have discharged their articles and the weighing machine $W_{2A}$ which has just been subjected to a zero-point adjustment are replenished with articles. In the example of Figure 3(c), all the weighing machines are made to participate in the selection of combinations, and one pair composed of the weighing machines $W_{4A}$ and $W_{4B}$ is selected to form part of the "optimum" combination, of which one machine $W_{4A}$ is set with its zero-point adjustment flag at "H" so that it may have its zero point adjusted in the subsequent cycle. Figure 3(d) shows an example of operations subsequent to those of Figure 3(c). In the example of Figure 3(d), the weighing machine $W_{4A}$ with the zero-point flag at "H" is not made to participate in the selection of combinations but is subjected to a zero-point adjustment. This example exemplifies the one-pair doubling because the paired weighing machines $W_{5A}$ $W_{5B}$ are selected to form part of the "optimum" combination; there is also selected the weighing machine $W_{4B}$, which is paired with the machine $W_{4A}$ being subjected to the zero-point adjustment. In this example, the computation control unit 5 sets the zero-point adjustment flag of the weighing machine $W_{5B}$ of the one-pair doubling to "H" so that that machine may have its zero-point adjusted in the next cycle. Figure 3(e) shows an example of operations subsequent to those of Figure 3(d). In this example, not only the weighing machine $W_{5B}$ which is to be subjected to a zero-point adjustment but also the weighing machine $W_{4B}$ cannot receive the subsequent supply, because the latter machine has been selected to form part of the "optimum" combination so that it has discharged its articles, but has its restoration delayed so that it is left non-participating into the subsequent combination. This limits the participants to the remaining ten weighing machines. This example has no doubling because the weighing machines selected for the "optimum" combination do not belong to the respectively common pairs. Moreover, the weighing machine $W_{4A}$ paired with the machine $W_{4B}$ is selected in the optimum combination in this cycle, too. Figure 3(f) shows an example, in which the weighing machine $W_{4B}$ has its restoration further delayed, because the partner machine $W_{4A}$ has been selected although the machine $W_{4B}$ itself has not been made to participate in the previous combination, so that the combinatorial computation is conducted with the remaining eleven machines whereas the partner weighing machine $W_{3A}$ contained in the "optimum" combination is set with the zero-point adjustment flag "H".

While one weighing machine of any pair is thus continuously incorporated into the optimum combination, the partner machine has its restoration delayed for a long time. The examples of the operations of Figure 3 are summarized and enumerated in Table 1.

## Table 1

| No. | Doubling | Flag"H" | Adjustment | Nonparticipants | Participants |
|-----|----------|---------|------------|-----------------|--------------|
| a | O | O | O | 1 | 11 |
| b | X | X | O | 1 | 11 |
| c | O | O | X | 0 | 12 |
| d | O | O | O | 1 | 11 |
| e | X | X | O | 2 | 10 |
| f | O | O | X | 1 | 11 |

In the first embodiment as is apparent from Table 1, one of the paired weighing machines is set with the flag "H", only in the case of the one-pair doubling, so that it may be subjected to the zero-point adjustment in the subsequent weighing operation. Incidentally, if, during the execution of the zero-point adjustment of one weighing machine, the partner machine is selected in the optimum combination, as has been described above, that one weighing machine cannot be replenished with the articles. This empties the two paired weighing machines at the end of the zero-point adjustment. As a result, the number of the weighing machines available to participate in the combination is indefinite, e.g., 11, 11, 10 and so on, partly because only one of the partners can be supplied and partly because the partners may possibly be continuously selected.

How to determine the combination patterns of the weight value data will now be described. In the case where $n$ weighing machines are provided, generally speaking the number of all possible combinations is expressed by $(2^n-1)$. From these numerous combinations, according to the present invention the number of the weighing machine pairs each having both its two partners selected in the optimum combination is limited to one so that a combination pattern without the doubling and a combination pattern with the reselected. The method of forming those combination patterns is exemplified, as follows:

(1) Count Method:
A counter is consecutively incremented, and whether the combination pattern has the one-pair doubling or not is checked upon each increment.

(2) ROM Memory Method:
All the patterns without the doubling and with the one-pair doubling are stored in advance in an ROM and are called consecutively so that they may be formed.

(3) Combination Method by Pairs:
The patterns without the doubling and with the one-pair doubling are combined by pairs in a branching manner to form the combination patterns, as illustrated in Table 2.

Table 2

| Weighing Machines | $W_{1A}$ $W_{1B}$ | $W_{2A}$ $W_{2B}$ | $W_{3A}$ $W_{3B}$ |
|---|---|---|---|
| | 0    0 | 0    0 | 0    0 |
| Combination | 0    1 | 0    1 | 0    1 |
| Patterns | 1    0 | 1    0 | 1    0 |
| | 1    1 | 1    1 | 1    1 |

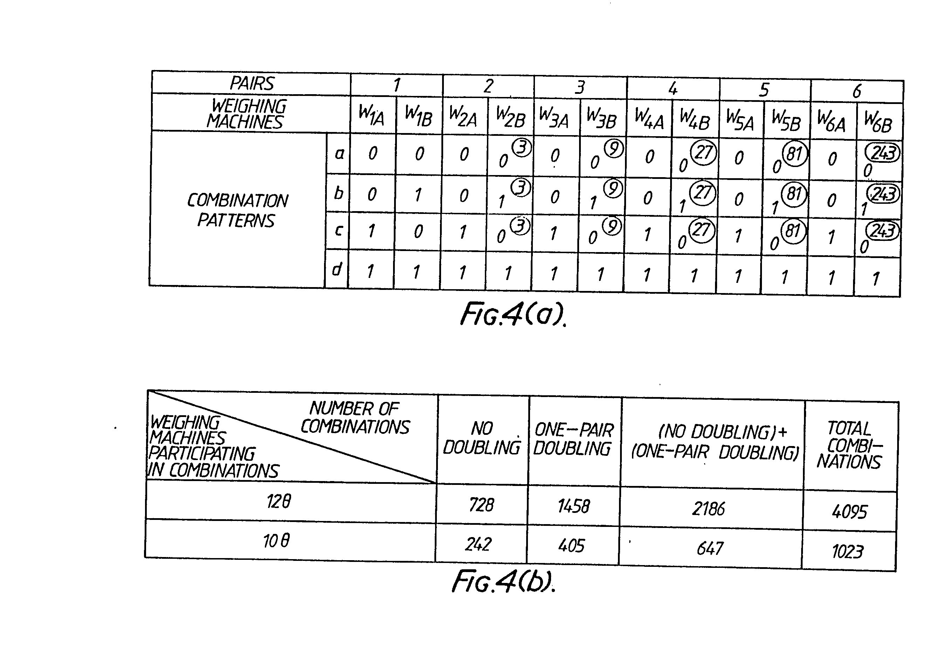

Of the above-enumerated methods (1) to (3), the methods (2) and (3) are useful and highly efficient because they can form the necessary combination patterns without the doubling and with the one-pair doubling. Figure 4(a) is a diagram for explaining the number of combinations thus obtained. For example, the number of possible combinations is indicated by the circled number 3 in the case where the pattern of row a of the weighing machines of the second pair is combined with the non-doubling patterns a, b and c of the weighing machines of the first group. The row a of the third pair has the number of combinations of $3^2 = 9$ with the non-doubling patterns a, b and c of the weighing machines of the first and second pairs. Likewise, the number of combinations of the sixth pair reaches $3^5 = 243$. Figure 4(b) enumerates the numbers of combinations compared. The number of total combinations is $(2^{12}-1) = 4,095$ for twelve weighing machines and $(2^{10}-1) = 1,023$ for ten weighing machines. In contrast, the number of combinations in a case where only the combination patterns without the doubling and with the one-pair doubling are selected is reduced to 2,186 for twelve weighing machines and 647 for ten weighing machines.

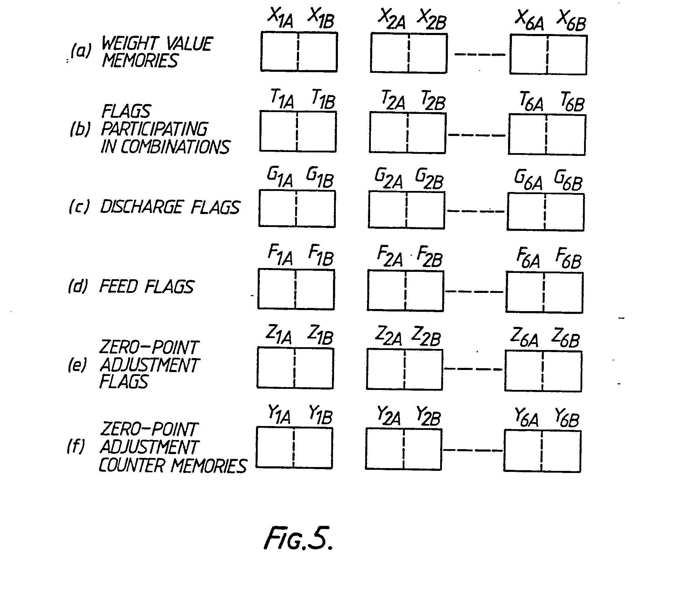

Examples of the memories used in an embodiment of the invention will now be described with reference to Figure 5. Figure 5(a) shows weight value memories in which are stored the respective weight value data $X_{1A}$ to $X_{6B}$ of the weighing machines $W_{1A}$ to $W_{6B}$. Figure 5(b) shows flags $T_{1A}$ to $T_{6B}$ participating in the combinations, which are set to "H" or "L" in a manner to correspond to the respective weighing machines so that the weighing machines with the flags "H" may participate in the combinatorial computations. Figure 5(c) show discharge flags $G_{1A}$ to $G_{6B}$, which are set to "H" or "L" in a manner to correspond to the respective weighing machines so that the weighing machines with the flags "H" may have their respective weighing hoppers opened to discharge their respective articles. Figure 5(d) show feed flags $F_{1A}$ to $F_{6B}$ which are set to "H" or "L" in a manner to correspond to the respective weighing machines so that the weighing machines with the flags "H" may have their pool hoppers opened to feed or supply their respective weighing hoppers with the articles. For this supply, the A- or B-side gates are opened in case the both-side open pool hoppers shown in Figure 2(a) are used, whereas the shaking and moving operations are initiated in the respective cases where the dispersing chutes and the moving pool hoppers shown in Figures 2(b) and (c) are used. Figure 5(e) shows zero-point adjusting counters $Z_{1A}$ to $Z_{6B}$ which are set at "H" or "L" in a manner to correspond to the respective weighing machines so that the weighing machines with the flags "H" may have their respective zero-points adjusted. Figure 5(f) shows zero-point adjustment counter memories $Y_{1A}$ to $Y_{6B}$ in which are stored the numbers of the respective discharging or weighing operations of the weighing machines.

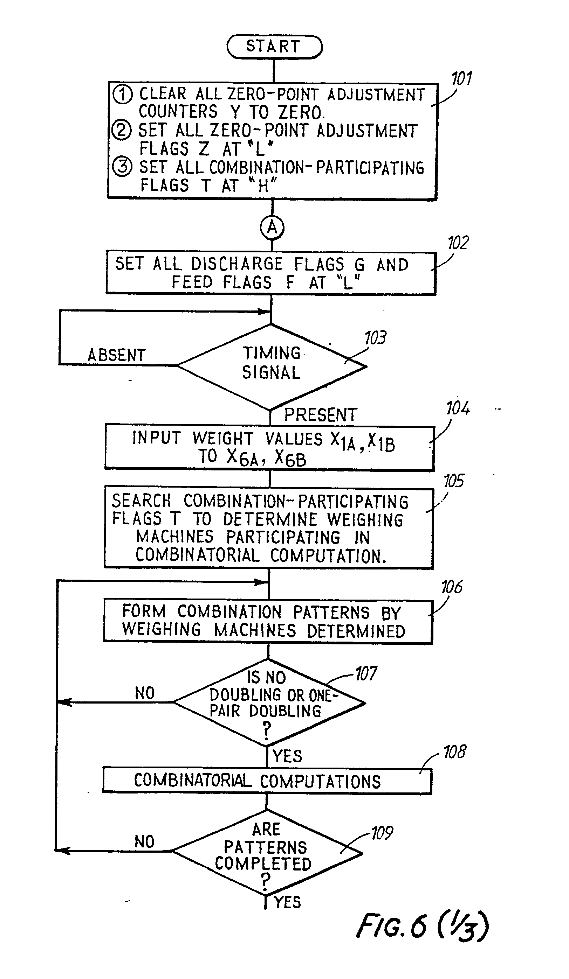

The operation of the first embodiment will now be described with reference to the steps shown in the flow chart of Figure 6.

(1) Step 101:
The computation control unit 5:
① Clears all the zero-point adjustment counters Y to zero;
② Sets all the zero-point adjustment flags Z at "L"; and
③ Sets all the combination-participating flags T at "H".

6

Thus, the computerized weighing apparatus is set with the initial conditions for starting the combinatorial weighing operations.

(2) Step 102:

The computation control unit 5 sets all the discharge flags G and the feed flags at "L".

(3) Step 103:

The computation control unit 5 checks whether or not the timing signal T from the packaging machine has been received, and advances to a subsequent step 104 if it is present.

(4) Step 104:

In response to the timing signal T, the computation control unit 5 feeds the start signal ST to the multiplexer 3 to cause the respective weight value data $X_{1A}$ to $X_{6B}$ of the weighing machines $W_{1A}$ to $W_{6B}$ to be read into the computation control unit 5 through the A/D converter 4.

(5) Step 105:

The computation control unit 5 seraches the combination-participating flags T to cause the weighing machines with the flags "H" to participate in the combinations. In the initial state, all twelve weighing machines participate in the combinations. Incidentally, in this embodiment, the number of the weighing machines which are available for participation in the combinations is indefinite, as enumerated in Table 1.

(6) Step 106:

The computation control unit 5 forms all the combination patterns that are composed of the weighing machines determined at the step 105.

(7) Step 107:

The computation control unit 5 checks each combination pattern formed to see whether it contains non-doubling or one-pair doubling weighing machines of the respective pairs and advances to a subsequent step if YES.

(8) Step 108:

The computation control unit 5 executes the combinatorial computations with both the non-doubling or one-pair doubling combination patterns determined at the step 107 and the weight value data of the weighing machines.

(9) Step 109:

The computation control unit 5 checks whether all the patterns have been subjected to the processing steps 106 to 108, and advances to a subsequent step if YES.

(10) Step 110:

The computation control unit 5 compares the combinatorial weight values determined by the combinatorial computations with a target weight value to determine whether or not one of those combinations provides an "optimum" combination, and advances to a step 111 if an "optimum" combination can be found or to a step 114 it not.

(11) Step 114:

In the absence of an optimum combination, the computation control unit 5 sets both the feed flags F and the combination-participating flags T at "H" so as to replenish the weighing machines having smaller weight value data than a predetermined value with further articles to be weighed. In this case, however, the control unit 5 excludes the weighing machines having their zero-point adjustment flags Z at "H" and sets the flags F and T of one weighing machine having a smaller weight value, for example, if both the machines of one pair have weight values less than the predetermined value.

(12) Step 111:

Where an "optimum" combination can be found, the computation control unit 5 sets the discharge flags G and the feed flags F of the corresponding weighing machines at "H" and the feed flags corresponding to the weighing machines having the combination-participating flags T of "L" at "H" in accordance with the pattern of the optimum combination.

In this case, as shown in Figure 3(e), the combination-participating flags T of two or more weighing machines may be at "L".

(13) Step 112:

The computation control unit 5 outputs the opening signals to the weighing hoppers of the weighing machines having the discharge flags G of "H" and increments the zero-point adjustment counters Y corresponding to the weighing machines having the discharge flags G of "H" by +1. In other words, the computation control unit 5 counts the number of discharges for each weighing hopper.

(14) Step 113:
The computation control unit 5 sets all the combination-participating flags T at "H".

(15) Step 115:
The computation control unit 5 checks whether or not the zero-point adjustment flags Z of the respective weighing machines are at "H", and advances to a step 116 if YES and to a step 118 if NO.

(16) Step 116:
The computation control unit 5 executes the zero-point adjustments of any weighing machines having the zero-point adjustment flags Z of "H" because those machines were selected for the optimum combination in the previous combinatorial weighing operation so that they discharged their articles.

(17) Step 117:
The computation control unit 5 sets the zero-point adjustment flags Z of the weighing machines which have just been subjected to zero-point adjustments to "L". At this time, the feed flags F of those weighing machines are set at "H" at the step 111 so that they are prepared for the state in which they are to be supplied with the articles in the subsequent combinatorial weighing operation.

(18) Step 118:
The computation control unit 5 checks whether both discharge flags $G_{iA}$ and $G_{iB}$ of a pair have been set at "H" and advances to a step 122 if this is so and to a step 119 if not.

(19) Step 119:
The computation control unit 5 sets the zero-point adjustment flag Z of that weighing machine of the doubled pair which has a larger counted value of the zero-point adjustment counter Y, i.e. which has a larger weight value and has conducted the discharge, to "H".

(20) Step 120:
The computation control unit 5 clears to zero the zero-point adjustment counters Y corresponding to the weighing machines having the zero-point adjustment flags of "H", and sets the feed flags F of those weighing machines at "L" so that the machines may be prohibited from being supplied and may be subjected to the zero-point adjustment in the subsequent combinatorial weighing operations.

(21) Step 121:
The computation control unit 5 sets the combination-participating flags of the weighing mahcines having the zero-point adjustment flags of "H" at "L" so that those weighing machines may not participate in the subsequent combinatorial computations.

(22) Step 122:
The computation control unit 5 reads and searches the feed flags F in pairs for each loop of the program.

(23) Step 123:
The computation control unit 5 checks the feed flags $F_{iA}$ and $F_{iB}$.

(24) Step 124:
The computation control unit 5 outputs the A-side gate opening signal $P_{iA}$ of the pool hopper $P_i$ of any weighing machine having a feed flag $F_{iA}$ of "H".

(25) Step 125:
The computation control unit 5 outputs the B-side gate opening signal $P_{iB}$ of the pool hopper $P_i$ of any weighing machine having a feed flag $F_{iB}$ of "H".

(26) Step 126:
In a case where both the feed flags $F_{iA}$ and $F_{iB}$ are at "H", i.e. in a case where both the weighing machines of a common pair are empty and they are not subjected to the zero-point adjustment, the computation control unit 5 outputs the A-side gate opening signal $P_{iA}$ of the pool hopper $P_i$ of the corresponding weighing machines.

(27) Step 127:
Subsequently to the step 126, the computation control unit 5 sets the B-side combination-participating flag $T_{iB}$ of the corresponding weighing machine at "L".

8

(28) Step 128:

The computation control unit 5 checks whether or not the search of the feed flags is completed, and executes again the processing steps from Ⓐ if YES and returns to the step 122 to repeat the subsequent processing steps if NO.

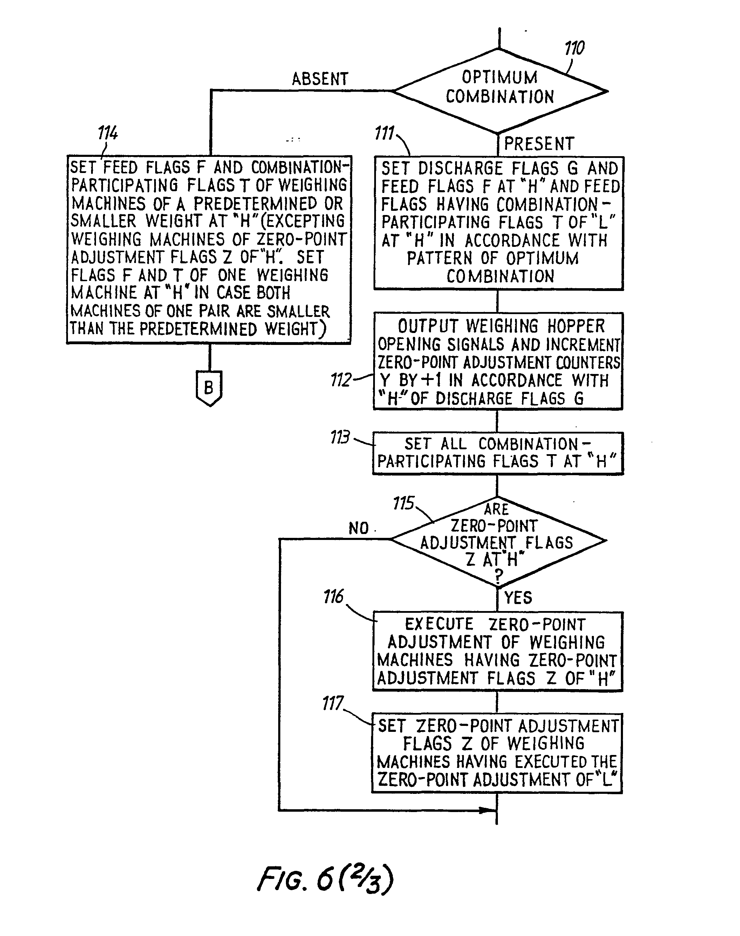

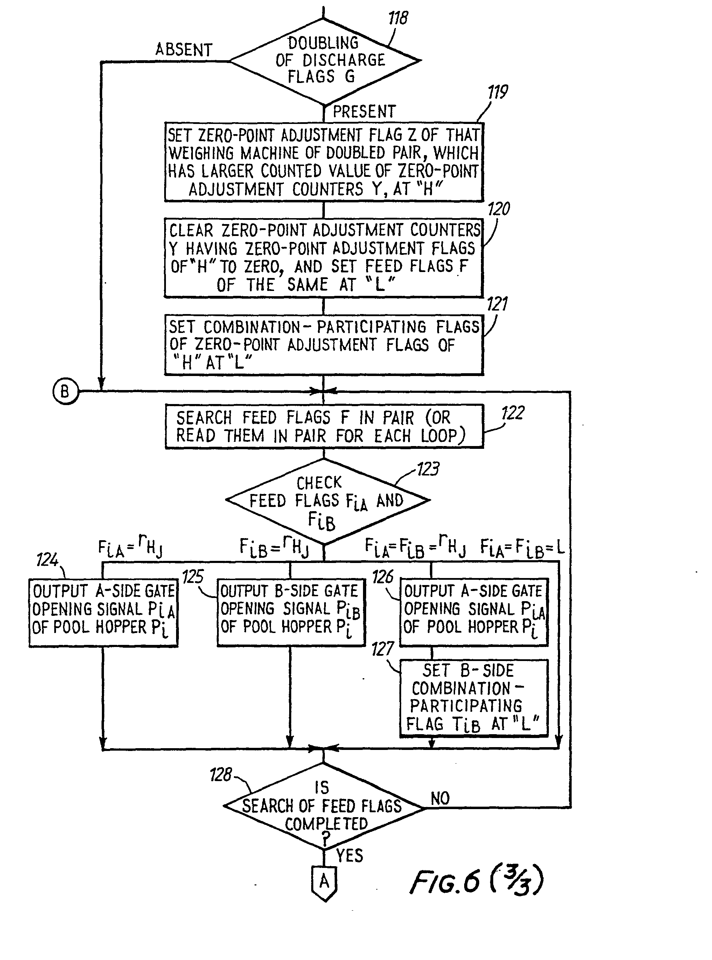

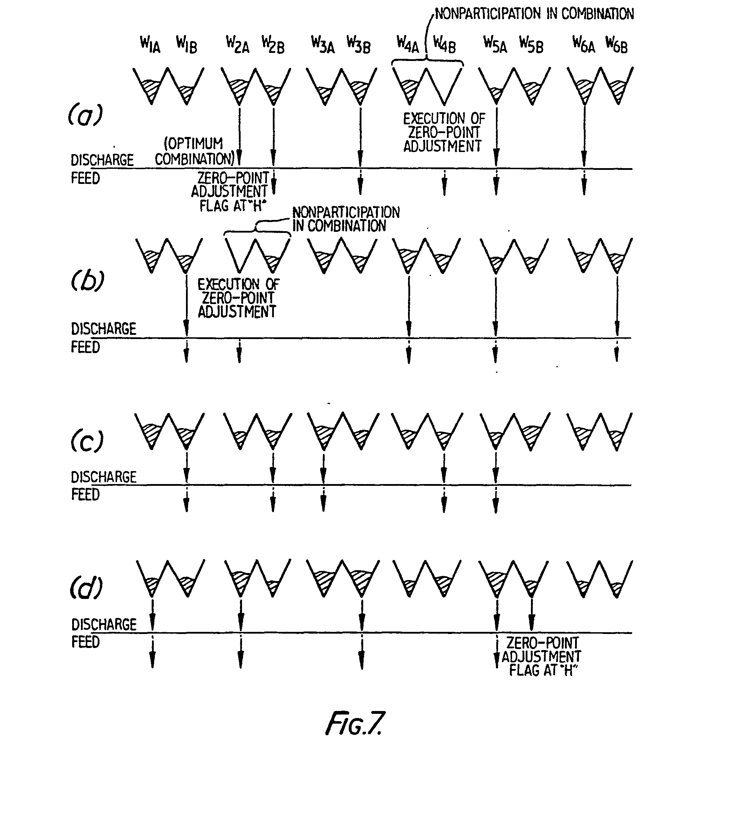

A second embodiment of the present invention will now be described with reference to the diagram of Figure 7. Figure 7(a) shows an example with the doubling, in which both the paired weighing machines $W_{2A}$ and $W_{2B}$ are selected in the optimum combination. The one weighing machine $W_{2A}$ has its zero-point adjustment flag at "H".

In this example, however, neither the weighing machine $W_{4B}$, which has just been subjected to a zero-point adjustment, nor the other weighing machine $W_{4A}$ paired with the former is made to participate in the combinatorial weighing operation, therefore leaving ten weighing machines to participate in the combinatorial computations. Figure 7(b) shows an example without the doubling, in which either of the weighing machines of each pair are not selected in the optimum combination. The weighing machine $W_{2A}$ having its zero-point adjustment flag set at "H" in the previous combinatorial computation is subjected to a zero-point adjustment. In this example, neither the weighing machine $W_{2A}$ having its zero point adjusted nor its partner weighing machine $W_{2B}$ is made to participate in a combinatorial computation at this time, therefore leaving ten weighing machines to participate in the combinatorial computation. Figure 7(c) shows an example without the doubling, in which none of the weighing machines selected for the optimum combination belong to common pairs. Accordingly, in this example, no zero-point adjustment is executed. As a result, all the twelve weighing machines participate in the combinatorial computations. Figure 7(d) shows an example with the doubling, in which the paired weighing machines $W_{5A}$ and $W_{5B}$ are selected in the optimum combination so that the latter one $W_{5B}$ is set with the zero-point flag at "H".

The operational examples of Figure 7 are enumerated in Table 3:

## Table 3

| No. | Doubling | Flag"H" | Adjustment | Nonparticipants | Participants |
|-----|----------|---------|------------|-----------------|--------------|
| a | O | O | O | 2 | 10 |
| b | X | X | O | 2 | 10 |
| c | X | X | X | 0 | 12 |
| d | O | O | X | 0 | 12 |

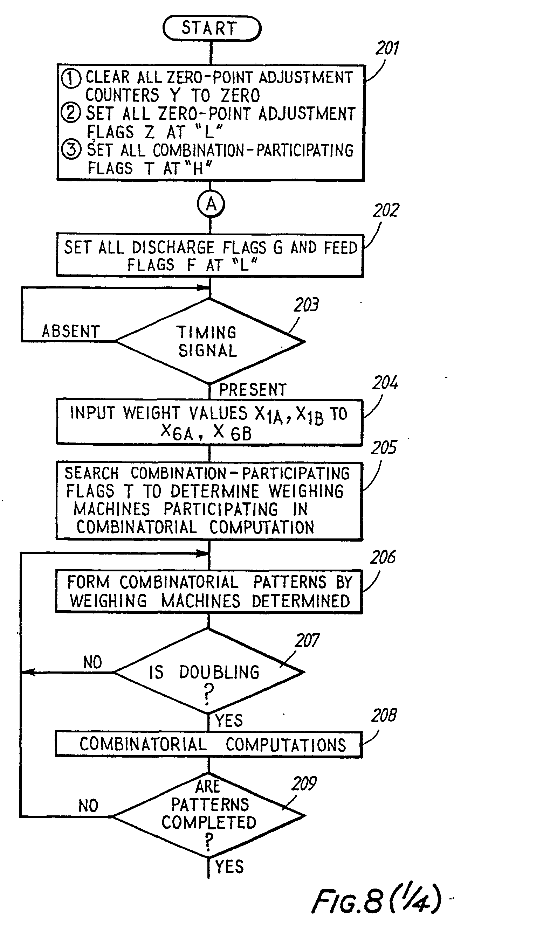

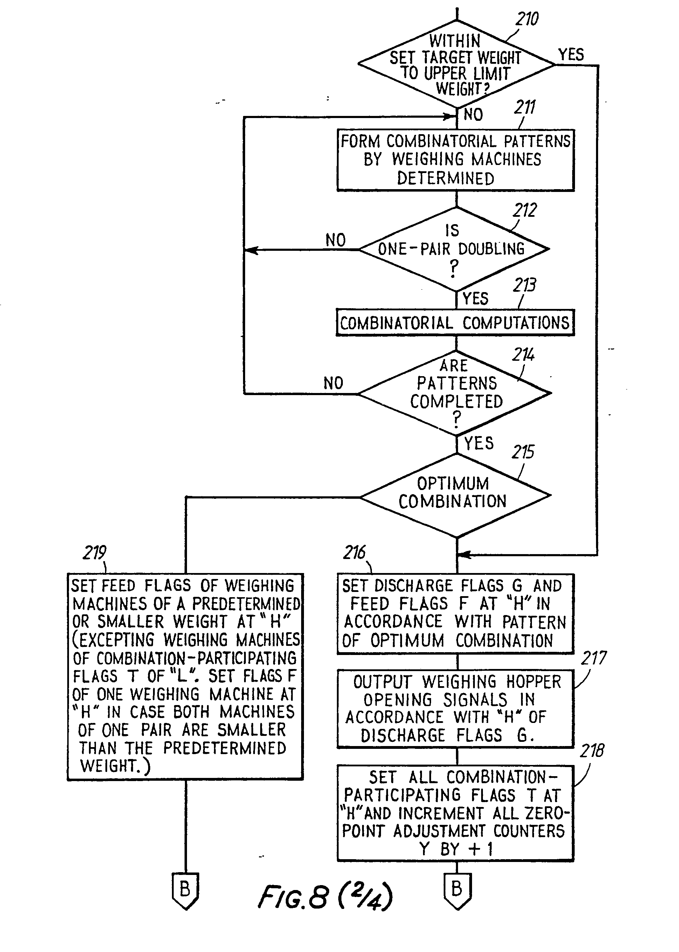

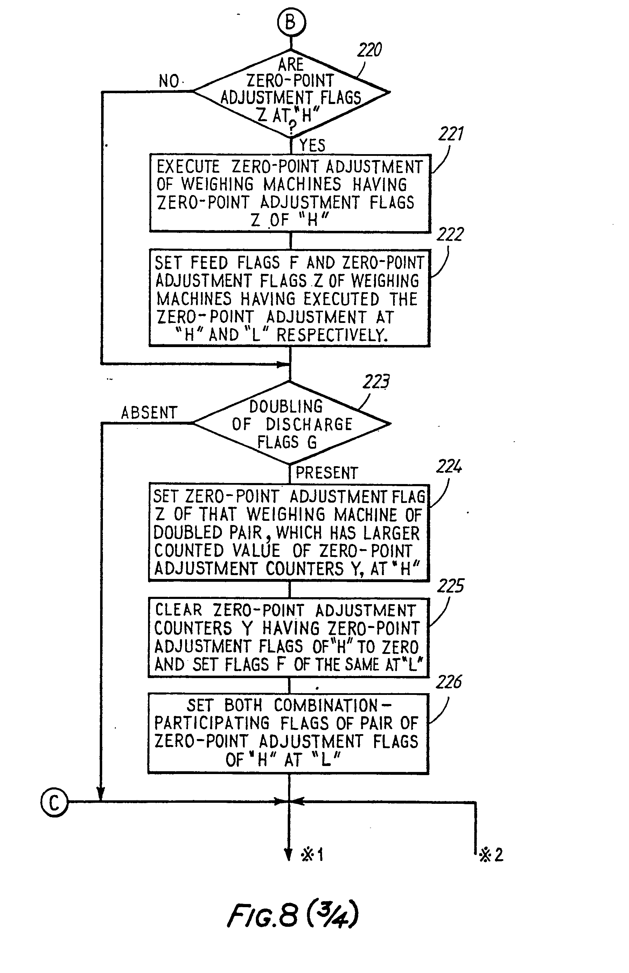

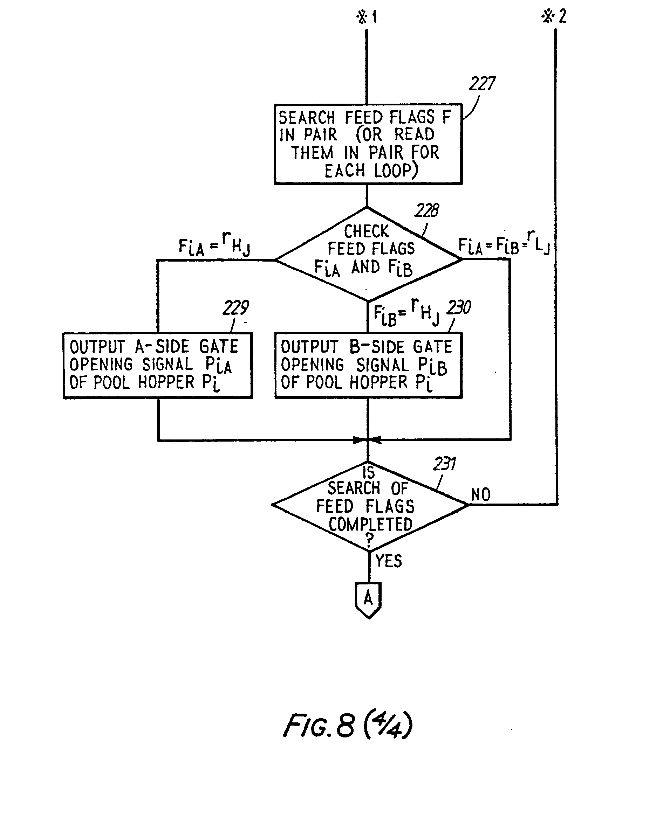

In the second example, as will be described with reference to the flow chart of Figure 8, the combinatorial computation is conducted preferably with the pattern having no doubling so that the weighing machines for the optimum combination are selected and emptied of their articles. Apparatus having this feature is known from EP—A—0085446. In a case where an "optimum" combination cannot be selected with a pattern having no doubling, the combinatorial computation is conducted with the one-pair doubling so that one of the partner weighing machines selected in the optimum combination is subjected to a zero-point adjustment in a subsequent cycle. At this time, the partner weighing machine paired with that having its zero point adjusted is also made not to participate in the subsequent combinatorial computation. In other words, the second embodiment is different from the foregoing first embodiment in that the pattern without the doubling is made preferential to reduce the chance of causing the doubled discharge, and in that the paired two weighing machines, one of which is being subjected to the zero-point adjustment, are made nonparticipants into the subsequent combinatorial computation so that the restorations of the weighing machines are made quickly and reliably. The second embodiment is characterized in that the number of the participants of the weighing machines in the combinatorial computation is ten or twelve.

Figure 8 is a flow chart for explaining the operation of the second embodiment, which will now be described.

(1) Steps 201 to 206:

The computation control unit 5 executes the same processing at the steps 201 to 206 as those of the foregoing first embodiment. At the step 206, however, the control unit 5 forms as the combination pattern all the combination patterns that are made by the ten or twelve weighing machines.

(2) Steps 207 to 209:

The computation control unit 5 selects only the pattern, in which each of its pairs is composed of only one weighing machine, from all the combination patterns made of the weighing machines, and conducts the combinatorial computations of all the patterns having no doubling.

(3) Step 210:

The computation control unit 5 compares the total combined weight value of the combinatorial computations, which is determined at the step 208, with the target weight value to check whether or not the optimum combination is present. As the optimum combination in this case, the control unit 5 selects the combination, in which the total combined weight value is between the set target value and the upper limit weight value, thereby to relax the conditions. The control unit 5 advances to a step 216 in case the optimum combination is present, and executes the step 211 and later steps in the case of absence.

(4) Steps 211 to 215:

The computation control unit 5 checks whether or not the combination pattern of the one-pair doubling, in which one pair is composed of two weighing machines, is present in all the aforementioned patterns, and executes the combinatorial computations of all the patterns of the one-pair doubling. After these combinatorial computations of all the patterns of the one-pair doubling are completed, the control unit 5 checks whether or not the optimum combination is present.

(5) Steps 216 to 219:

In the presence of the optimum combination, the computation control unit 5 sets both the discharge flags G and the feed flags F at "H" in accordance with the pattern of the optimum combination and outputs an opening signal q for opening the weighing hoppers of the weighing machines having the discharge flags G of "H". Subsequently, the control unit 5 sets all the combination-participating flags T at "H" and increments all the zero-point adjustment counters Y by +1. In the absence of the optimum combination, on the contrary, the computation control unit 5 sets the feed flags of the weighing machines equal to or smaller than a predetermined weight at "H". Incidentally, the weighing machines having the combination-participating flags T of "L" are excluded, and, in case both the partners of one pair have a weight equal to or smaller than the predetermined value, the feed flag F of one partner, e.g. the weighing machine having a smaller weight, is set at "H".

(6) Steps 220 to 223:

The computation control unit 5 checks whether or not the zero-point adjustment flags Z are at "H", and executes the zero-point adjustments of the weighing machines having the zero-point adjustment flags Z of "H". Then, the control unit 5 sets the feed flags F of the weighing machines having their zero points adjusted at "H" for preparation of the subsequent supply of the articles, and sets their zero-point flags Z at "L". Subsequently, the control unit 5 checks the doubling of the discharge flags G.

(7) Steps 224 to 226:

In case the discharge flags G are doubled, the computation control unit 5 the zero-point adjustment counter Z of the that weighing machine of the doubled pair, which has its zero-point adjustment counter Y of a larger value, at "H". Then, the control unit 5 clears the zero-point adjustment counter Y of the zero-point adjustment flag Z of "H" to zero and sets the feed flag of the same at "L" so that no articles may be supplied in a subsequent cycle. Subsequently, the control unit 5 both the two combination-participating flags of the paired weighing machines having the zero-point adjustment flags of "H" at "L".

(8) Steps 227 to 231:

The computation control unit 5 reads and searches the feed flags F by pair for each loop of the program to check the feed flags $F_{IA}$ and $F_{IB}$. The control unit 5 outputs the opening signal $P_{IA}$ for opening the A-side gate of the pool hopper $P_I$ in case the feed flag $F_{IA}$ of "H" and the opening signal $P_{IB}$ for opening the B-side gate of the pool hopper $P_I$ in case the feed flag $F_{IB}$ of "H". In case both the gate opening signals $P_{IA}$ and $P_{IB}$ are at "L", however, the control unit 5 leaves the pool hoppers unoperated. If all the searches of those feed flags are completed, the computation control unit 5 returns to Ⓐ to repeat the processing steps described above.

Thus, in the second embodiment, the combinatorial computations are executed preferably without the doubling to select the weighing machines for the optimum combination thereby to discharge the articles without the doubling and subsequently with the one-pair doubling in case the optimum combination is not obtained. As a result, the frequency of occurrences of the doubled discharges is made lower than that of the first embodiment.

According to the foregoing first embodiment, only the weighing machine to be subjected to the zero-point adjustment is made not to participate in the subsequent combinatorial computation so that reduction in the number of the subsequent combinatorial combinations is minimized.

Despite this feature, the first embodiment has a defect that one pair has its restoration delayed if its weighing machines are continuously selected in the optimum combination after the doubled discharge, as has been described hereinbefore, although the frequency itself is low.

The third embodiment, which will now be described, can make the restoration early and reliably while sacrificing the number of the subsequent combinations more or less. Contrary to the first embodiment in which only the weighing machine to be subjected to the zero-point adjustment after the doubled discharge is made a nonparticipant in the subsequent cycle, the partner weighing machine paired with the former one is also nonparticipating in the subsequent combinatorial computation. In this regard, the third embodiment is similar to the second embodiment so that the number of participants is either ten or twelve.

The flow chart of the operations of the third embodiment is substantially the same as those of the foregoing first and second embodiments and is accordingly omitted here.

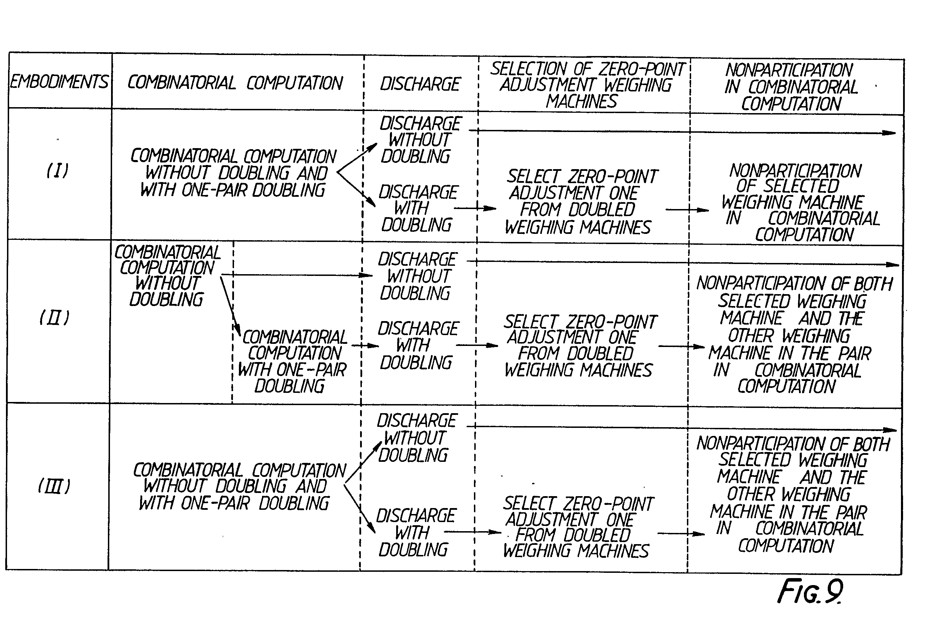

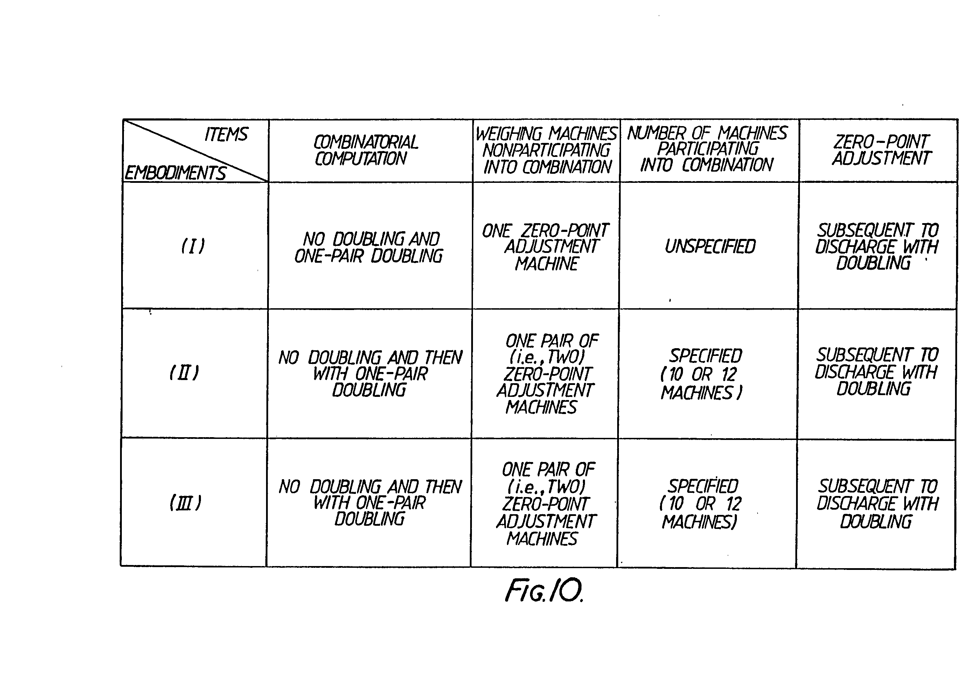

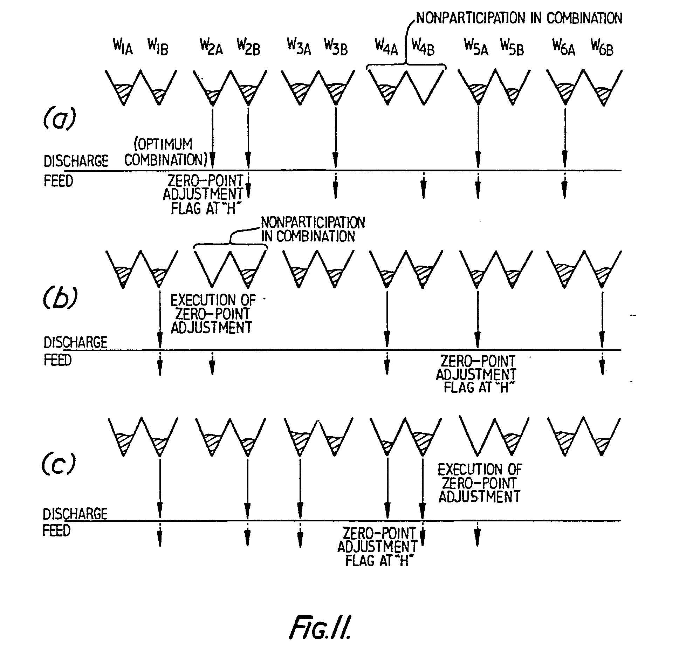

Figure 9 presents the operational procedures of the first to third embodiments comparatively, and Figure 10 is a table for explaining the differences in the characteristics among the embodiments.

Accordingly, according to the present invention, when combinatorial weighing is to be conducted using a computerized weighing apparatus having a plurality of pairs of weighing machines, the number of combinations to be computed in a subsequent cycle can be prevented from being reduced, thus improving combinatorial weighing accuracy, by allowing both the two weighing machines of only one pair to be selected in the optimum combination.

In case the two partners of one pair are selected together in the optimum combination so that they are emptied of their articles, moreover, at least one of them is selected and made a nonparticipant into the subsequent combinatorial computation so that its restoration can be promoted.

Since the weighing machine left nonparticipating has been subjected to the zero-point adjustment, still moreover, its zero-point adjustment can be rationally practised to provide an advantage that the computerized weighing operations can be made highly accurate and reliable.

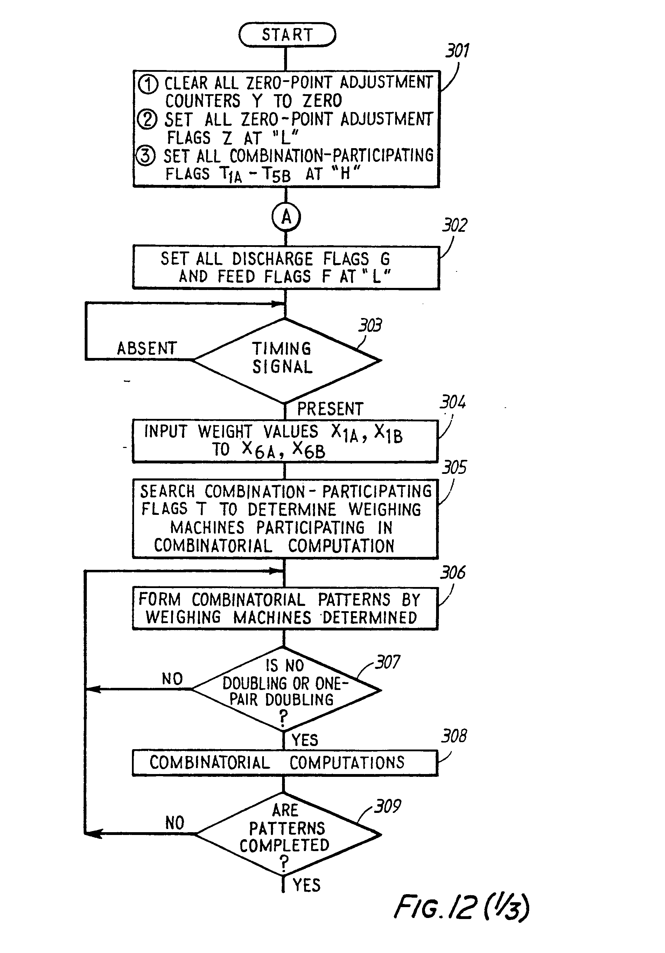

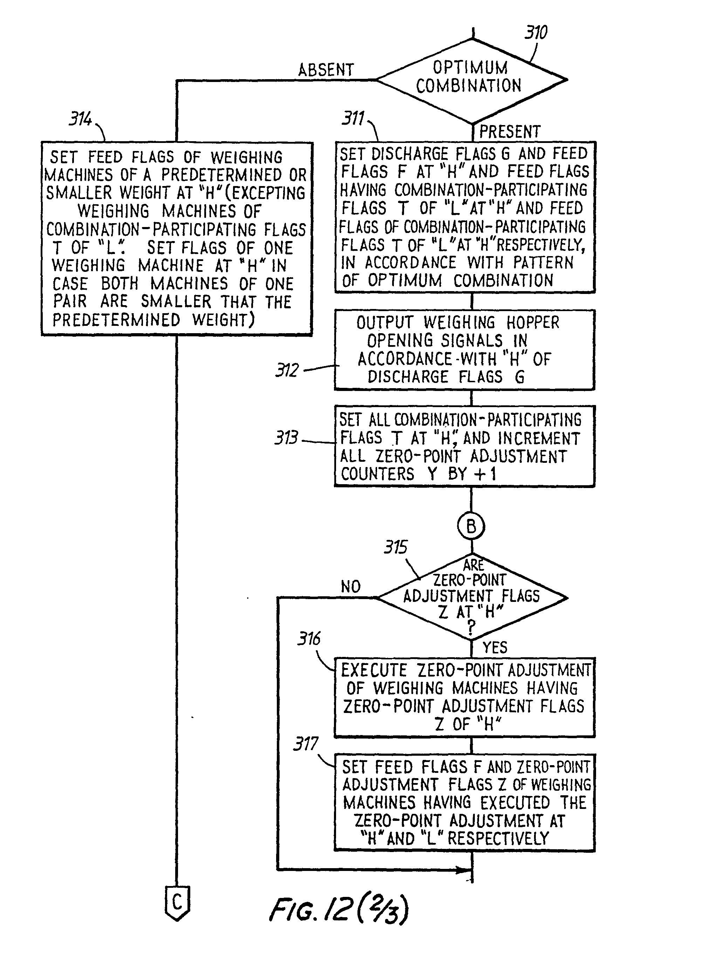

Now, the operations of a fourth embodiment of the present invention will be described with reference to Figures 11 to 14.

In the fourth embodiment, the description will be made with reference to an arrangement in which twelve weighing machines $W_{1A}$ to $W_{6B}$ are grouped into six pairs.

Figure 11(a) shows an example with the doubling, in which the paired weighing machines $W_{2A}$ and $W_{2B}$ are selected in the optimum combination. In this case, one partner $W_{2A}$ has its zero-point adjustment flag set at "H". In this example, both the weighing machine $W_{4B}$ which is to have its zero point adjusted and its partner machine $W_{4A}$ are made nonparticipants in the combinatorial calculations so that only ten weighing machines are available for participation. Figure 11(b) shows an example of the operations of the weighing machines, which are to be executed subsequent to those of Figure 11(a). In this example, both the weighing machine $W_{2A}$ having its zero-point adjustment flag set previously at "H" and its partner machine $W_{2B}$ are made nonparticipants so that the number of the participants is also ten in this case. On the other hand, this example corresponds to that without the doubling, because there is no pair of weighing machines which are selected in the optimum combination. Of the weighing machines which have been selected in this cycle for the optimum combination so that they have discharged their articles, the machine $W_{5A}$ has its zero-point adjustment flag set at "H". Figure 11(c) shows an example with the doubling, in which the paired weighing machines $W_{4A}$ and $W_{4B}$ are selected in the optimum combination like the example of Figure 11(a). One partner $W_{4A}$ has its zero-point adjustment flag set at "H". On the other hand, both the weighing machine $W_{5A}$ having its zero-point adjustment flag set previously at "H" and its partner $W_{5B}$ are made not to participate into the combination of this cycle so that the remaining ten weighing machines are the participants. The examples of the operations of Figure 11 are summarized in Table 4:

## Table 4

| No. | Doubling | Flag"H" | Adjustment | Nonparticipants | Participants |
|-----|----------|---------|------------|-----------------|--------------|
| a | O | O | O | 2 | 10 |
| b | X | O | O | 2 | 10 |
| c | O | O | O | 2 | 10 |

Specifically, the fourth embodiment of the present invention has the following features:

(1) The weighing machine to have its zero point adjusted is selected only from one pair having the doubling, if any, so that it is subjected to a zero-point adjustment subsequently to the occurrence of the doubling pair but otherwise is selected from those having been selected previously for the optimum combination so that they have been emptied of their articles, too, so that a zero-point adjustment is executed each cycle in either event. (Reference should be made to the weighing machine $W_{5A}$ of Figure 11(b).)

(2) That partner of the paired weighing machines, which is not subjected to the zero-point adjustment, is prevented from participating in the subsequent combination. Moreover, the nonparticipants in the subsequent combination are limited to only the paired two weighing machines, i.e. the machine having its zero point adjusted and its partner machine, so that there are always ten weighing machines available for participation in the combinations.

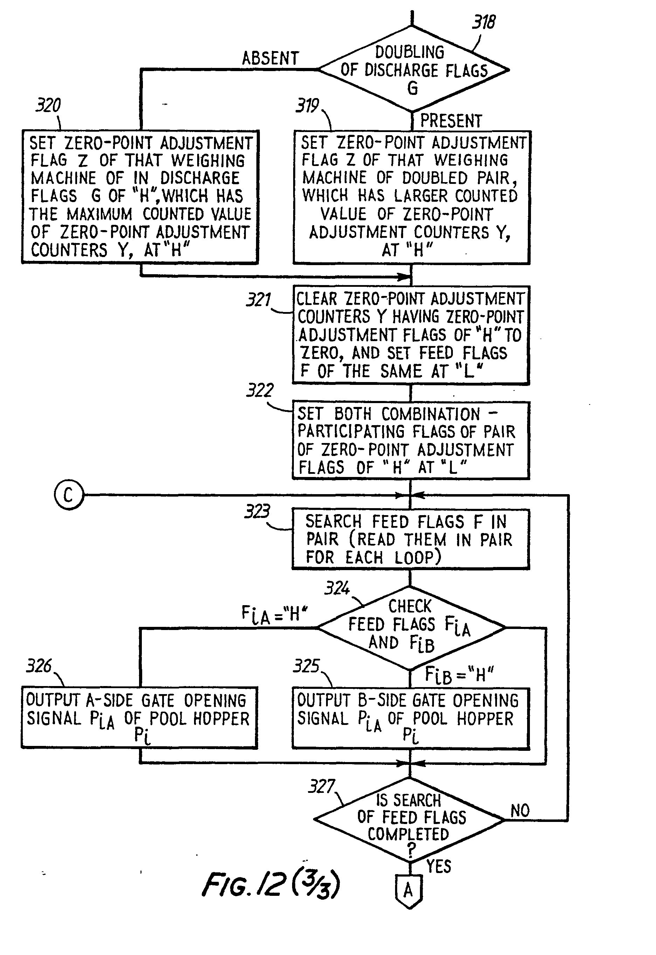

Reference will now be made to the flow chart of Figure 12 for explaining the operations of the fourth embodiment of the present invention.

11

(1) Step 301:

The computation control unit 5:

① Clears all the zero-point adjustment counters Y to zero;

② Sets all the zero-point adjustment flags Z at "L"; and

③ Sets all the combination-participating flags T at "H".

As a result, the combination-participating flags $T_{1A}$ to $T_{5B}$ are set at "H" whereas the remaining flags $T_{6A}$ and $T_{6B}$ are set at "L".

Now, the computerized weighing apparatus is set with the initial conditions for starting the combinatorial weighing operations.

(2) Step 302:

The computation control unit 5 sets all the discharge flags G and the feed flags at "L".

(3) Step 303:

The computation control unit 5 checks whether or not the timing signal from the packaging machine has been received, and advances to a subsequent step if so.

(4) Step 304:

In response to the timing signal T, the computation control unit 5 feeds the start signal ST to the multiplexer 3 to cause the respective weight value data $X_{1A}$ to $X_{6B}$ of the weighing machines $W_{1A}$ to $W_{6B}$ to be read into the computation control unit 5 through the A/D converter 4.

(5) Step 305:

The computation control unit 5 searches the combination-participating flags T to cause the weighing machines with the flags "H" to participate in the combination. In the initial state, the ten weighing machines $W_{1A}$ to $W_{5B}$ participate in the combination. Incidentally, in the case of this embodiment, the number of the weighing machines available for participation in the combination is definite, as enumerated in Table 4.

(6) Step 306:

The computation control unit 5 forms all the combination patterns that are composed of the weighing machines determined at the step 305.

(7) Step 307:

The computation control unit 5 checks each of the combination patterns to see whether it contains non-doubling or one-pair doubling weighing machines of the respective pairs and advances to a subsequent step if YES.

(8) Step 308:

The computation control unit 5 executes the combinatorial computations with both the non-doubling or one-pair doubling combination patterns determined at the step 307 and the weight value data of the weighing machines.

(9) Step 309:

The computation control unit 5 checks whether or not patterns have been subjected to the processing steps 306 to 308, and advances to a subsequent step if YES.

(10) Step 310:

The computation control unit 5 compares the combinatorial weight values determined by the combinatorial computations with a target weight value to determine whether or not one of those combinations provides an "optimum" combination, and advances to a step 311 if an "optimum" combination can be found or to a step 314 if not.

(11) Step 314:

In the absence of an "optimum" combination, the computation control unit 5 sets both the feed flags F and the combination-participating flags T at "H" so as to replenish the weighing machines having smaller weight value data than a predetermined value with further articles to be weighed. In this case, however, the control unit 5 excludes the weighing machines having their zero-point adjustment flags Z at "H" and sets the flags F and T of one weighing machine having a smaller weight value, for example, if both the machines of one pair have weight values less than the predetermined value.

(12) Step 311:

Where an "optimum" combination can be found, the computation control unit 5 sets the discharge flags G and the feed flags F of the corresponding weighing machines at "H" in accordance with the pattern of the optimum combination.

**(13) Step 312:**
The computation control unit 5 outputs the opening signals to the weighing hoppers of the weighing machines having the discharge flags G of "H".

**(14) Step 313:**
The computation control unit 5 sets all the combination-participating flags T at "H" and increments by +1 the zero-point adjustment counters Y of the just-discharged weighing machines.

**(15) Steps 315:**
The computation control unit 5 checks whether or not the zero-point adjustment flags Z of the respective weighing machines are at "H", and advances to a step 316 if YES and to a step 318 if NO.

**(16) Step 316:**
The computation control unit 5 executes the zero-point adjustments of the weighing machines having the zero-point adjustment flags Z of "H" because those machines were selected for the optimum combination in the previous combinatorial weighing operation so that they discharged their articles.

**(17) Step 317:**
The computation control unit 5 has subjected the zero-point adjustment of the weighing machine having the zero-point adjustment flag Z of "H" at the previous step 316, and sets the feed flag F of the weighing machine having its zero-point adjusted at "H" and the zero-point adjustment flag Z of the same at "L" so that the weighing machine having its zero-point adjustment completed may be supplied subsequently with the articles.

**(18) Step 318:**
The computation control unit 5 checks whether both discharge flags G of a pair have been set at "H" and advances to a step 319 if this is so and to a step 320 if not.

**(19) Step 319:**
The computation control unit 5 sets to "H" the zero-point adjustment flag Z of that weighing machine of a doubling discharge pair which has the or a largest counted value of the zero-point adjustment counter Y.

**(20) Step 320:**
The computation control unit 5 sets to "H" the zero-point adjustment flag Z of that weighing machine, of those having the discharge flags G of "H", which has the maximum counted value of its zero-point adjustment counter Y.

**(21) Step 321:**
The computation control unit 5 clears to zero the zero-point adjustment counter Y corresponding to the weighing machine having the zero-point adjustment flag of "H" and sets the feed flag F of the same at "L" to prohibit the corresponding weighing machine from being supplied with fresh articles so that the weighing machine may be subjected to the zero-point adjustment in the subsequent combinatorial weighing operation.

**(22) Step 322:**
The computation control unit 5 sets both the combination-participating flags of the paired weighing machines, one of which has the zero-point adjustment flag of "H", at "L" so that the paired two weighing machines may not participate in the subsequent combinatorial computation.

**(23) Step 323:**
The computation control unit 5 reads and searches the feed flags by pair for each loop of the program.

**(24) Step 324:**
The computation control unit 5 checks the feed flags $F_{IA}$ and $F_{IB}$.

**(25) Steps 326 and 325:**
In a case where the feed flag $F_{IA}$ is at "H", the computation control unit 5 outputs the opening signal $P_{IA}$ for opening the A-side gate of the pool hopper $P_I$. In a case where the feed flag $F_{IB}$ is at "H", on the other hand, the control unit 5 outputs the opening signal $P_{IB}$ for opening the B-side gate of the pool hopper $P_I$. In a case where both the feed flags $F_{IA}$ and $F_{IB}$ are at "L", however, the control unit 5 outputs neither of the opening signals for opening the pool hoppers.

**(26) Step 327:**
The computation control unit 5 checks whether or not the searches of the feed flags are completed up to the flags $F_{6A}$ and $F_{6B}$, and repeats the processing steps from the step 323 if the searches are not completed. If YES, however, the control unit executes again the processing steps subsequent to Ⓐ.

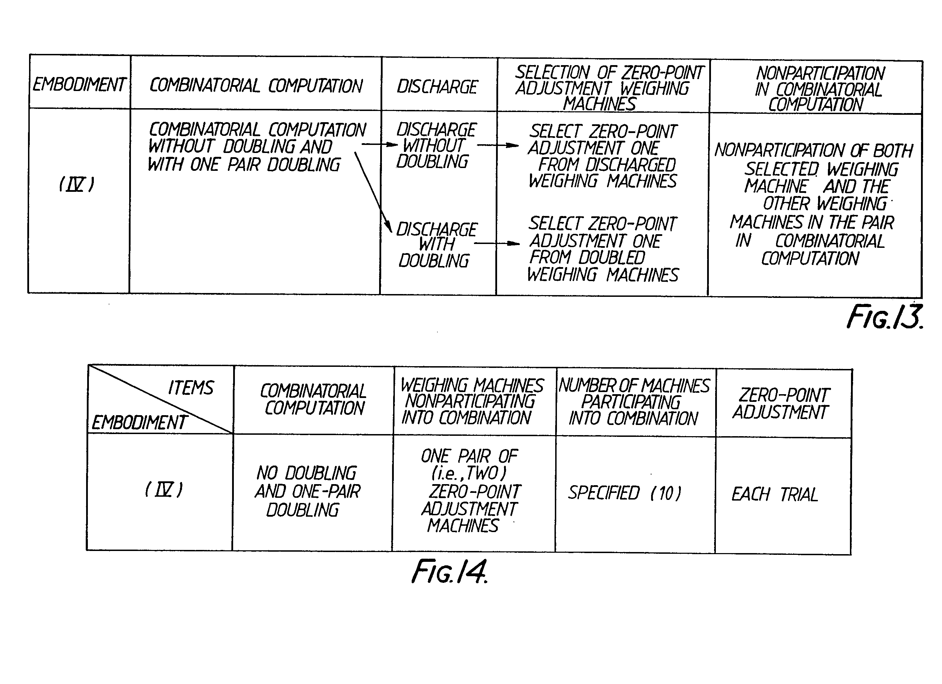

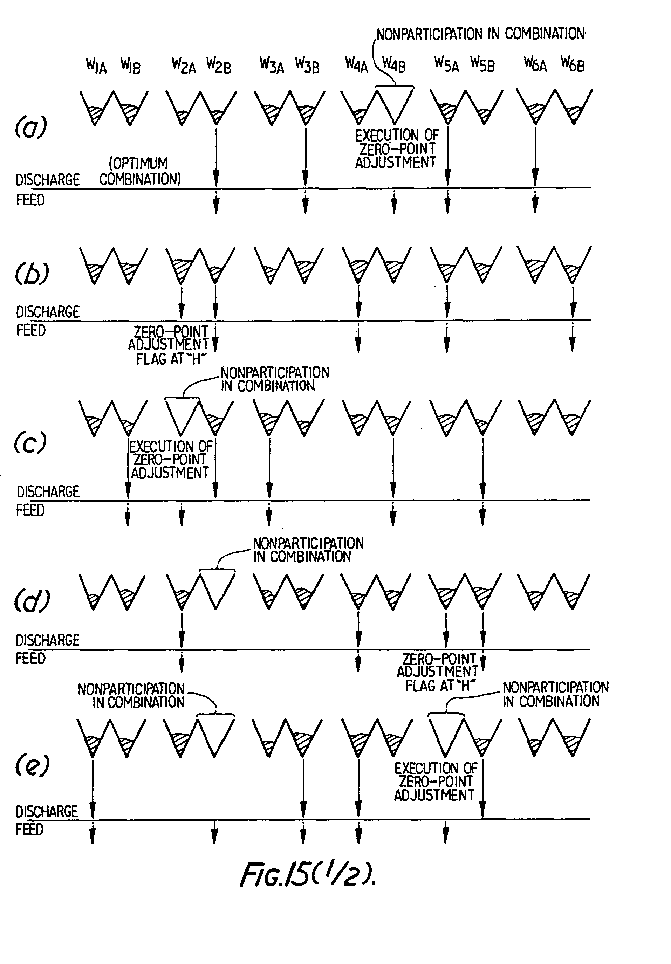

The characteristics of the fourth embodiment of the present invention are summarized in Figures 13 and 14.

As has been described hereinbefore, according to the fourth embodiment of the present invention, when combinatorial weighing is to be performed using a computerized weighing apparatus having a plurality of pairs of weighing machines, the number of combinations to be computed in a subsequent cycle is prevented from being reduced, like the aforementioned embodiments, thereby improving combinatorial weighing accuracy, by allowing both the two weighing machines of only one pair to be selected in the optimum combination.

In a case where both weighing machines of a pair have been selected in the optimum combination so that they have discharged their articles, moreover, at least one of the partners is selected and subjected to the zero-point adjustment in the subsequent combinatorial weighing operation so that its zero-point adjustment can be rationally conducted.

Since the weighing machine to be subjected to the zero-point adjustment and its partner machine are made not to participate in the subsequent combinatorial computation, still moreover, the restoration of the weighing machine having its zero point adjusted is promoted. Furthermore, the frequency of the adjustments is increased by adjusting the indefinite and variable zero point of any weighing machine in each cycle so that the zero point can be corrected before its variation is augmented.

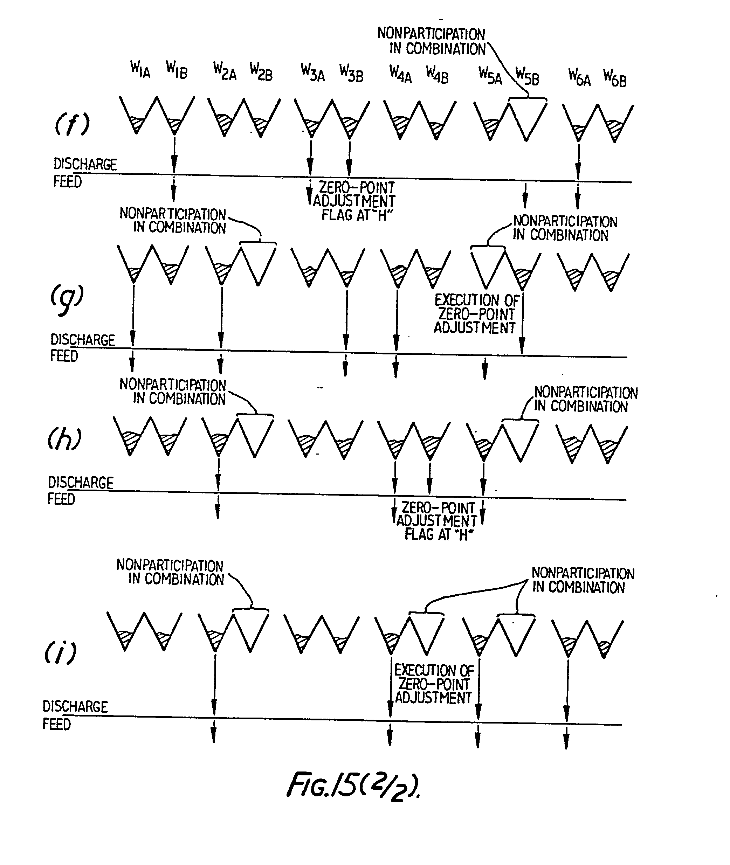

Figures 15 to 20 show fifth and sixth embodiments of the present invention.

Figure 15 is a diagram for explaining the fifth embodiment, in which twelve weighing machines $W_{1A}$ to $W_{6B}$ are grouped into six pairs.

Figure 15(a) shows an example in which the eleven weighing machines excepting the machine $W_{4B}$ having its zero-point adjusted are made to participate without the doubling in the combination. Figure 15(b) shows an example with the doubling, in which the paired weighing machines $W_{2A}$ and $W_{2B}$ are selected in the optimum combination. One partner machine $W_{2A}$ has its zero-point adjustment flag set at "H". In this example, all the twelve machines participate in the combinatorial computation. Figure 15(c) shows an example in which the weighing machine $W_{2A}$ having its zero-point adjustment flag set previously at "H" is subjected to the zero-point adjustment whereas the remaining eleven machines are made to participate without the doubling in the combination. Figure 15(d) shows an example, in which the paired weighing machines $W_{5A}$ and $W_{5B}$ are doubly discharged whereas the weighing machine $W_{2B}$ is made a nonparticipant so that the remaining eleven machines are made to participate in the combinatorial computation. In this case, one partner $W_{5A}$ of the weighing machines having been doubly discharged has its zero-point adjustment flag set at "H". Figure 15(e) shows an example of the discharge without the doubling, in which not only the weighing machine $W_{5A}$ having its zero point adjusted but also the weighing machine $W_{2B}$ is made an nonparticipant so that the remaining ten machines are made to participate in the combinatorial computation. Figure 15(f) shows an example, in which the paired weighing machines $W_{3A}$ and $W_{3B}$ are doubly discharged and in which one partner $W_{3B}$ is set with the zero-point adjustment flag at "H". Since the weighing machine $W_{5B}$ is not one of the participants, the remaining eleven machines participate in the combinatorial computation. Figure 15(g) shows an example of the discharge without the doubling like that of Figure 15(e). In this example, the weighing machine $W_{2B}$ in addition to the machine $W_{5A}$ having its zero point adjusted is made a non participant so that the remaining ten weighing machines are made to participate in the combinatorial computation. Figure 15(h) shows an example with the doubling discharge, in which the paired weighing machines $W_{4A}$ and $W_{4B}$ are discharged together before the weighing machines having doubly discharged are recovered. As a result, the two weighing machines $W_{2B}$ and $W_{5B}$ are not the participants so that the remaining ten machines are made to participate in the combinatorial computation. Figure 15(i) shows an example of the discharge without the doubling, in which the respective partners $W_{2A}$ and $W_{5A}$ of the nonparticipants $W_{2B}$ and $W_{5B}$ of Figure 15(b) are selected in the optimum combination so that the weighing machines $W_{2B}$ and $W_{5B}$ are not supplied with the articles. As a result, the nonparticipants in this cycle are limited to the three weighing machines, i.e. the machines $W_{2B}$ and $W_{5B}$ and the machine $W_{4B}$ having their respective zero-points adjusted in this cycle so that the remaining nine machines participate in the combinatorial computation.

Thus, according to the feature of the fifth embodiment, whether or not the doubling is present in the previous discharge is checked by means of the doubling discharge flag E so that, in the case of the double discharge in the previous cycle, the combinatorial computation in this cycle is conducted with the pattern without the doubling thereby to reduce the probability of the increase in the number of the empty weighing machines supplied with none of the articles. In the case of the discharge without the doubling, on the contrary, the combinatorial computation is conducted without the doubling or with the one-pair doubling.

It should be noted that this feature is known *per se* from EP—A—0085446. However, EP—A—0085446 is not in any way concerned with zero-point adjustment of weighing machines.

The examples of the operations of Figure 15 are summarized in Table 5.

Table 5

| No. | Doubling | Flag"H" | Adjustment | Nonparticipants | Participants |
|-----|----------|---------|------------|-----------------|--------------|
| a | X | X | O | 1 | 11 |
| b. | O | O | X | 0 | 12 |
| c | X | X | O | 1 | 11 |
| d | O | O | X | 1 | 11 |
| e | X | X | O | 2 | 10 |
| f | O | O | X | 1 | 11 |

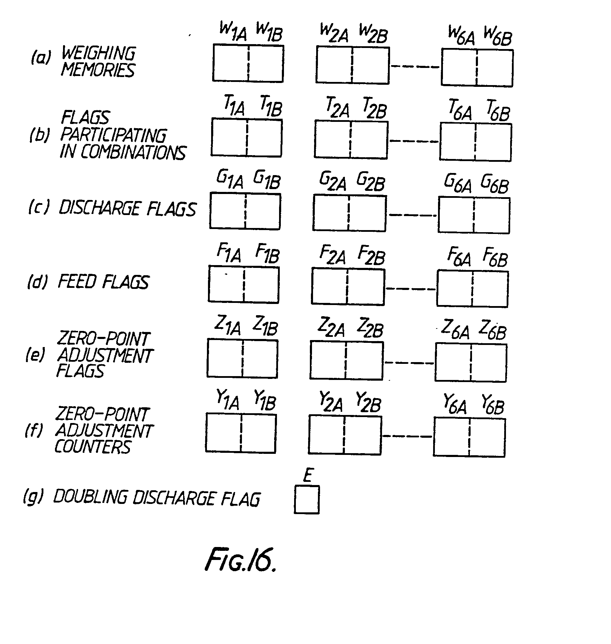

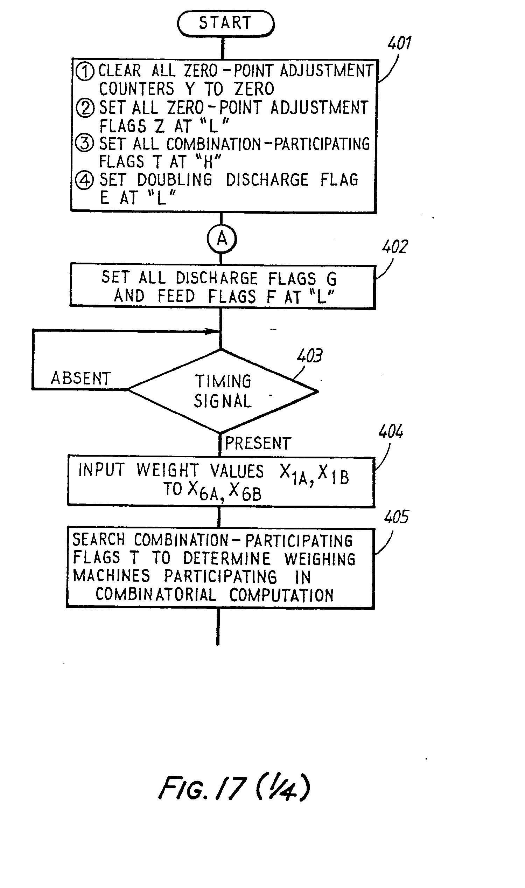

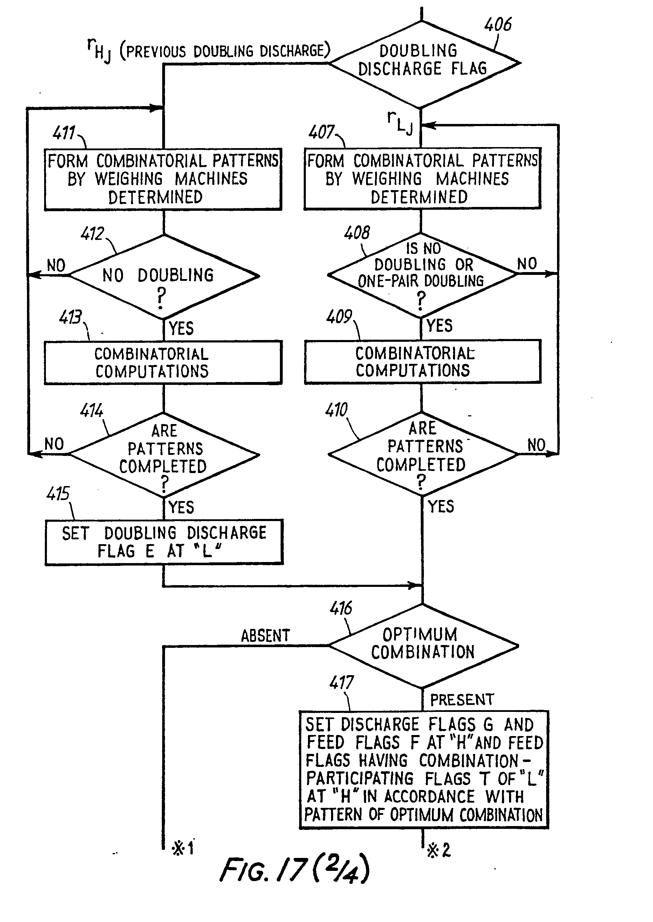

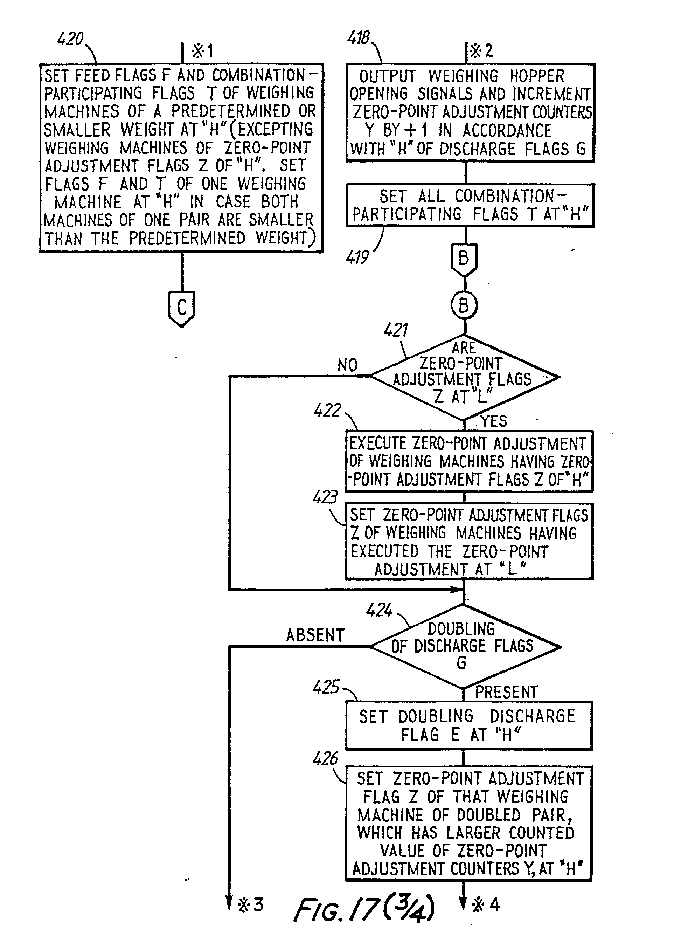

Next, the examples of the memories to be used in the fifth embodiment will be described with reference to Figure 16. The eight value memories of Figure 16(a), the flags participating into the combinations of Figure 16(b), the discharge flags of Figure 16(c), the feed flags of Figure 16(d), the zero-point adjustment flags of Figure 16(e) and the zero-point adjustment counters of Figure 16(f) are made similar to those shown in Figure 5. To the fifth embodiment, there is added the doubling discharge flag which is shown in Figure 16(g). This doubling discharge flag E is set at "H" in the case of the double discharge of the previous cycle.

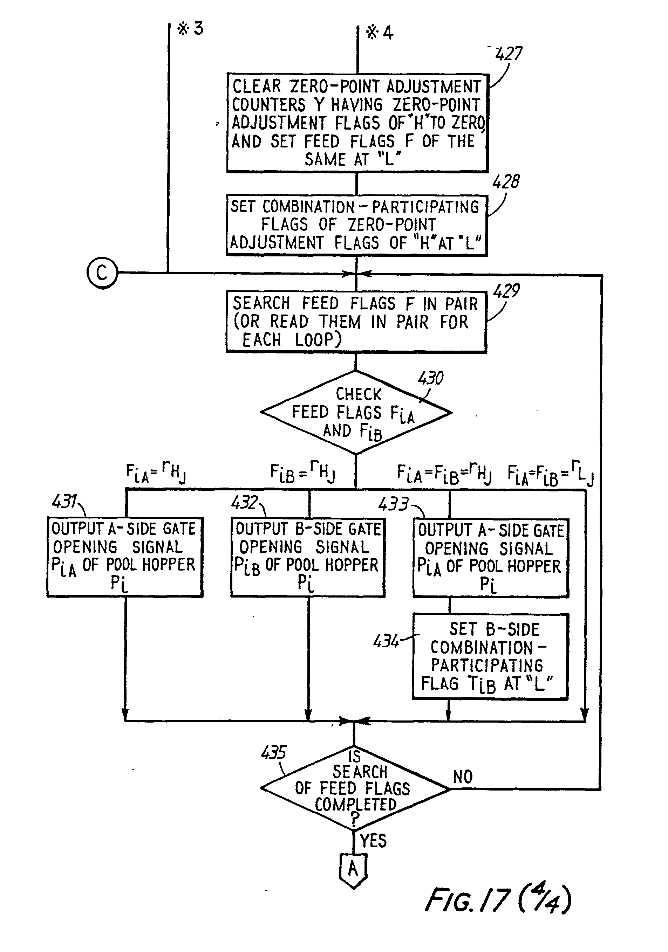

Figure 17 is a flow chart for explaining the operations of the fifth embodiment.

(1) Step 401:

The computation control unit 5:

① Clears all the zero-point adjustment counters Y to zero;

② Sets all the zero-point adjustment flags Z at "L";

③ Sets all the combination-participating flags T at "H"; and

④ Sets the doubling discharge flag E at "L".

Now, the computerized weighing apparatus is set with the initial conditions for starting the combinatorial weighing operations.

(2) Step 402:

The computation control unit 5 sets all the discharge flags G and the feed flags at "L".

(3) Step 403:

The computation control unit 5 checks whether the timing signal from the packaging machine is inputted or not, and advances to a subsequent step if present.

(4) Step 404:

In response to the timing signal T, the computation control unit 5 feeds the start signal ST to input the respective weight value data $X_{1A}$ to $X_{6B}$ of the weighing machines $W_{1A}$ to $W_{6B}$ to the multiplexer 3 through the A/D converter 4.

(5) Step 405:

The computation control unit 5 searches the combination-participating flags T to cause the weighing machines with the flags "H" to participate into the combination. In the initial state, all the twelve weighing machines participate into the combination. Incidentally, in the case of this embodiment, the number of the weighing machines to participate into the combination is indefinite, as enumerated in Table 5.

(6) Step 406:

The computation control unit 5 checks the doubling discharge flag to advance to a step 411 in case that flag is caused to take "H" by the previous double discharge and to a step 407 in case the flag is at "L".

(7) Steps 411 to 415:

In the presence of the previous double discharge, the computation control unit 5 checks whether or not the two weighing machines of one pair are doubly included together in the combination pattern, and selects only the pattern without the doubling for the combinatorial computation. When the computations of all the patterns are completed, the control unit 5 sets the doubling discharge flag E at "L".

15

(8) Steps 407 to 410:

In the absence of the previous double discharge, the computation control unit 5 selects the pattern without the doubling or with the one-pair doubling from the combination patterns to execute the combinatorial computations of all the patterns.

(9) Steps 416:

The computation control unit 5 compares the combinatorial eight values determined by the combinatorial computations with a target weight value to check whether or not the weighing machines for the optimum combination are present, and advances to a step 417 if present or to a step 420 if absent.

(10) Step 420:

In the absence of the optimum combination, the computation control unit 5 sets both the feed flags F and the combination-participating flags T at "H" so as to replenish the weighing machines having smaller weight value data than a predetermined value with the articles, to supply them with the starting articles or to refresh them. In this case, however, the control unit 5 excludes the weighing machines with the zero-point adjustment flags Z at "H" and sets the flags F and T of one weighing machine having a smaller weight value, for example, if both the machines of one pair have weight values than the predetermined value.

(11) Step 417:

In the presence of the optimum combination, the computation control unit 5 sets the discharge flags G and the feed flags F of the corresponding weighing machines at "H" and the feed flags corresponding to the weighing machines having the combination-participating flags T of "L" at "H" in accordance with the pattern of the optimum combination.

In this case, as shown in Figure 15(e), there may be present a weighing machine which has its combination-participating flag of "L" despite all the zero-point adjustment flags are at "L".

(12) Step 418:

The computation control unit 5 outputs the opening signals to the weighing hoppers of the weighing machines having the discharge flags G of "H" and increments the zero-point adjustment counters Y corresponding to the weighing machines having the discharge flags of "H" by +1. In other words, the computation control unit 5 counts the number of discharges for each weighing hopper.

(13) Step 419:

The computation control unit 5 sets all the combination-participating flags T at "H".

(14) Step 421:

The computation control unit 5 checks the respective weighing machine as to whether or not the zero-point adjustment flags Z are at "H", and advances to a step 422 if YES and to a step 424 if NO.

(15) Step 422:

The computation control unit 5 executes the zero-point adjustments of the weighing machines having the zero-point adjustment flags Z of "H" because those machines were selected for the optimum combination in the previous combinatorial weighing operation so that they discharge their articles.

(16) Step 423:

The computation control unit 5 sets the zero-point adjustment flags Z of the weighing machines having the executed the zero-point adjustments at "L". At this time, the feed flags F of those weighing machines are set at "H" at the step 417 so that they are prepared for the state in which they are to be supplied with the articles in the subsequent combinatorial weighing operation.

(17) Step 424:

The computation control unit 5 checks the doubling of the discharge flags G, $G_{IA}$ and $G_{IB}$ and advances to a step 429 in the absence and to a step 425 in the presence.

(18) Step 425:

In case the discharge flags G are doubled, the computation control unit 5 sets the doubling discharge flag at "H".

(19) Steps 426:

The computation control unit 5 sets the zero-point adjustment flag Z of that weighing machine of the doubled pair, which has a larger counted value of the zero-point adjustment counter Y, i.e., which has a larger weight value and has conducted the discharge, at "H".

(20) Step 427:

The computation control unit 5 clears the zero-point adjustment counters Y corrresponding to the weighing machines having the zero-point adjustment flags of "H" to zero and sets the feed flags F of those weighing machines at "L" so that the machines may be prohibited from being supplied and may be subjected to the zero-point adjustment in the subsequent combinatorial weighing operations.

(21) Step 428:
The computation control unit 5 sets the combination-participating flags of the weighing machines having the zero-point adjustment flags of "H" at "L" so that those weighing machines may not participate into the subsequent combinatorial computations.

(22) Step 429:
The computation control unit 5 reads and searches the feed flags F in pair for each loop of the program.

(23) Step 430:
The computation control unit 5 checks the feed flags $F_{IA}$ and $F_{IB}$.

(24) Step 431:
The computation control unit 5 outputs the A-side gate opening signal $P_{IA}$ of the pool hopper $P_I$ of the weighing machine having the feed flag $F_{IA}$ of "H".

(25) Step 432:
The computation control unit 5 outputs the A-side gate opening signal $P_{IB}$ of the pool hopper $P_I$ of the weighing machine having the feed flag $F_{IB}$ of "H".

(26) Step 433:
In case both the feed flags $F_{IA}$ and $F_{IB}$ are at "H", i.e., in case both the weighing machines of a common pair are empty so that they are not subjected to the zero-point adjustment, the computation control unit 5 outputs the A-side gate opening signal $P_{IA}$ of the pool hopper $P_I$ of the corresponding weighing machines.

(27) Step 434:
Subsequently to the step 433, the computation control unit 5 sets the B-side combination-participating flag $T_{IB}$ of the corresponding weighing machines at "L".

(28) Step 435:
The computation control unit 5 checks whether or not the search of the feed flags is completed, and executes again the processings from Ⓐ is YES and returns to the step 429 to repeat the subsequent processings if NO.

[VI] Sixth Embodiment
The foregoing embodiment has the problem shown in Figures 15(g) to (i), although the frequency of occurrences is low. Specifically, as shown in Figure 15(g), since the discharges from the partners of the respective pairs continue despite they are conducted without the doubling, the weighing machine $W_{2B}$ is not recovered yet so that the two weighing machines $W_{2B}$ and $W_{5A}$ are the nonparticipants. Turning to Figure 15(h) showing the example with the double discharge, in which the paired weighing machines $W_{4A}$ and $W_{4B}$ are emptied before they are not recovered from their double discharges, the two weighing machines $W_{2B}$ and $W_{5B}$ are made not to participate in the combinatorial computation. Now, if the weighing machines $W_{2A}$ and $W_{5A}$ paired with their partners $W_{2B}$ and $W_{5B}$ having failed to participate in the weighing operation in this cycle are continuously selected in the optimum combination in the subsequent cycle, as shown in Figure 15(i), the nonparticipants are the weighing machines $W_{2B}$, $W_{4B}$ and $W_{5B}$ so that the number of the nonparticipants is increased to deteriorate the combination accuracy.

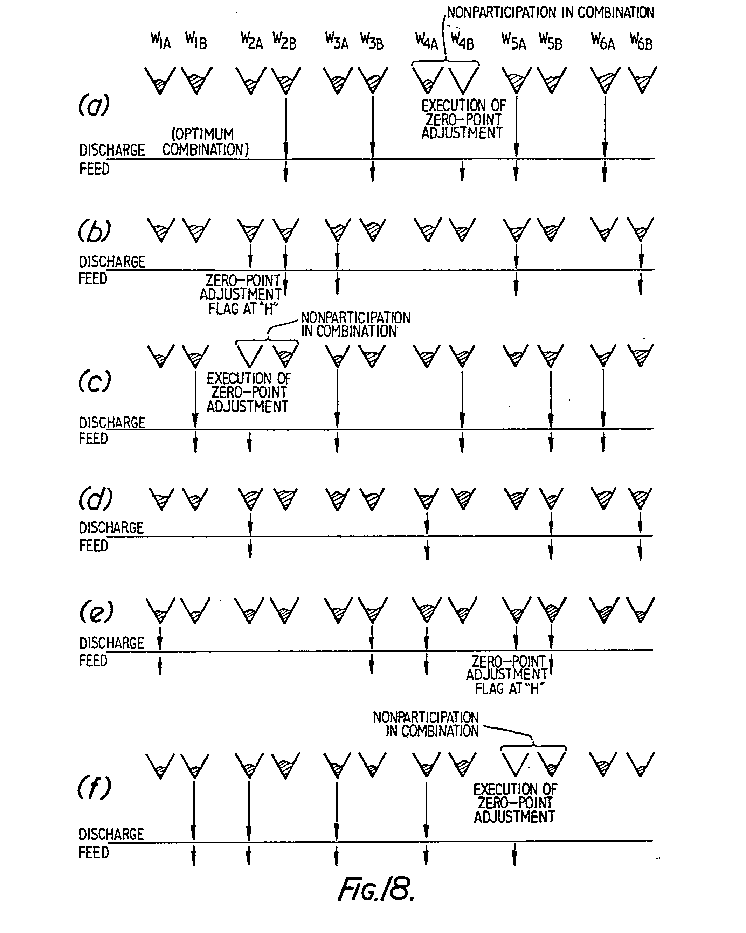

With this problem in mind, therefore, in the sixth embodiment shown in Figure 18, the paired two weighing machines are made together, in case they are doubly emptied, as shown in Figure 18(b), not to participate in the subsequent combinatorial computation, as shown in Figure 18(c), so that the number of the nonparticipants may not be increased to three or more. Thus, the partner weighing machines paired with the weighing machines to be subjected to the zero-point adjustments are left nonparticipating so that the restoration of the emptied weighing machine may be promoted.

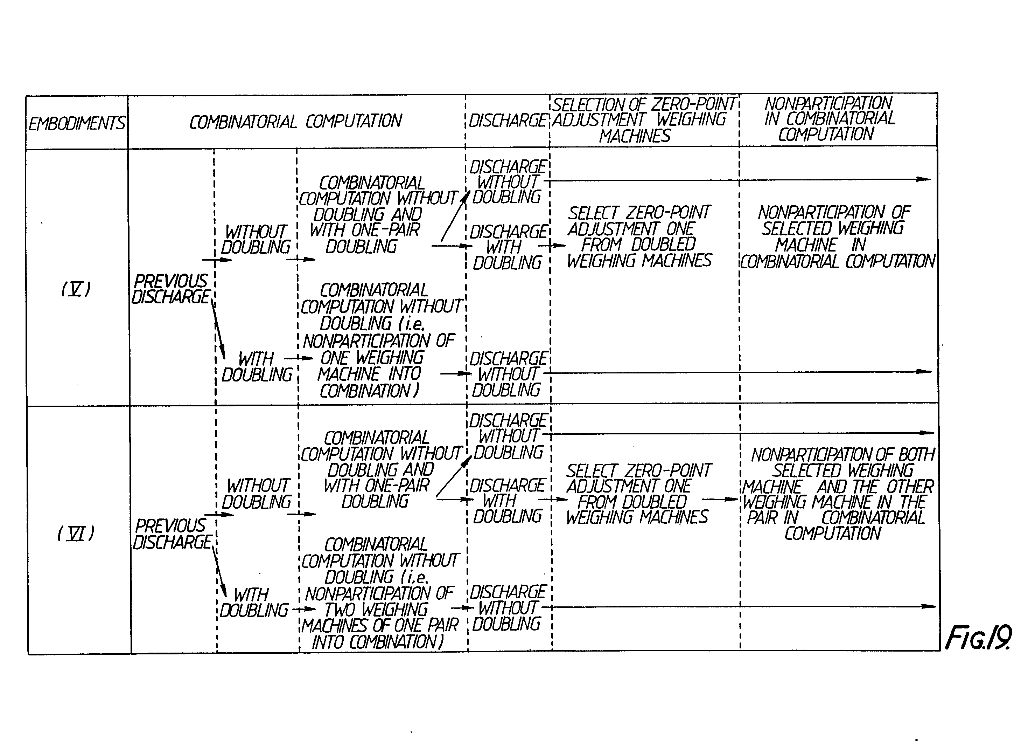

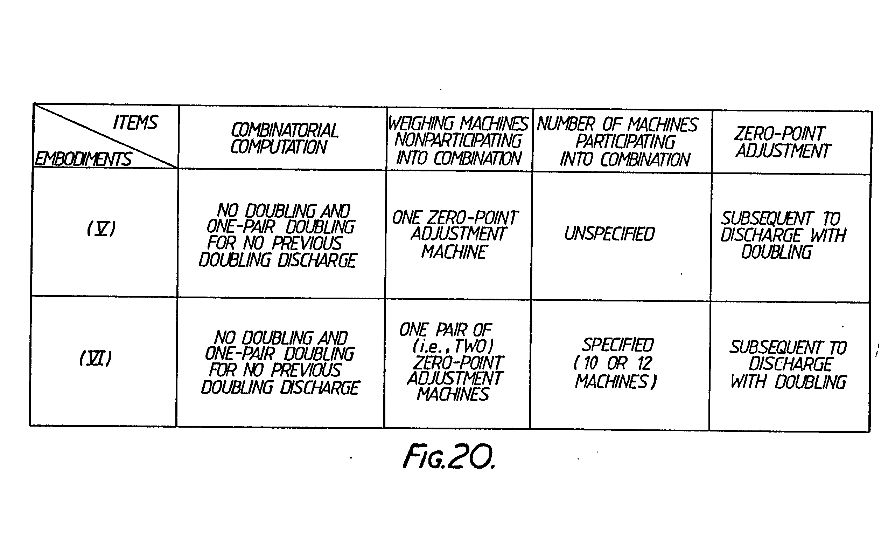

The characteristics of the fifth and sixth embodiments are compared with reference to Figures 19 and 20.

Thus, in the fifth and sixth embodiments of the present invention, when combinatorial weighing is to be conducted using a computerized weighing apparatus having a plurality of pairs of weighing machines, as in the first to fourth embodiments of the present invention, the number of combinations to be computed in a subsequent cycle is prevented from being reduced to improve the combinatorial weighing accuracy by allowing both the two weighing machines of only one pair to be selected in the optimum combination.

Moreover, whether or not the double discharge having one pair composed of two weighing machines is conducted in the previous combinatorial weighing operation is judged in the computation for the optimum combination so that the optimum combination is selected exclusively from the combinations with the doubling in the cycle subsequent to the double discharge to prevent the double discharges from continuously occurring thereby to promote the restorations of the weighing machines.

Since the weighing machine having failed to participate into the combination is subjected to the zero-point adjustment only in the cycle subsequent to the double discharge, still moreover, the zero-point adjustments of the weighing machines can be rationally conducted to provide an advantage that the computerized weighing operations can be performed highly accurately and reliably.

## Claims

1. Computerized combinatorial weighing apparatus, for carrying out repeatedly a weighing cycle for providing respective selected quantities of articles, which apparatus comprises:

a plurality of weighing machines (2), for holding articles being weighed;

supply means (1) for temporarily holding articles to be weighed and delivering batches of such articles respectively to the said weighing machines (2); and

a combination control unit (5) for combining, in each weighing cycle, respective batch weight measures, provided by a group of the said weighing machines (2), to select an acceptable combination of such weighing machines (2) holding a total combined weight of articles equal or closest to a preselected target weight, and bringing about discharge of the batches of articles from those weighing machines (2) belonging to the said acceptable combination, thereby to obtain the required selected quantity of articles; the combination control unit (5) being operable, after the weighing machines (2) belonging to the selected acceptable combination have discharged their respective batches of articles, to bring about a zero-point adjustment, in the next weighing cycle, of a selected one of the weighing machines of that selected acceptable combination, which weighing machine (2) is thereby excluded from the group of weighing machines (2) to be used by the combination control unit (5) in that next weighing cycle;

characterised in that the said supply means (1) comprise a set of pool hoppers, associated respectively with individual pairs of the said weighing machines (2) and each operable to deliver a batch of such articles selectively to either one of the weighing machines of the pair concerned, and further characterised in that the said combination control unit (5) is such that every possible combination of weighing machines that includes more than one of the said individual pairs thereof is excluded from selection in a weighing cycle as the said acceptable combination, and if the acceptable combination selected in a weighing cycle includes one of the said individual pairs the weighing machine (2) selected for zero-point adjustment in the next weighing cycle is one of the weighing machines (2) of that pair.

2. Apparatus as claimed in claim 1, wherein the said combination control unit (5) comprises a discharge counter connected and arranged for storing, for each weighing machine (2) of the said plurality, an individual count value indicative of the number of times the weighing machine concerned has discharged a batch of articles, the said combination control unit (5) being operable, if the acceptable combination selected in the immediately preceding cycle did not include both weighing machines of any of the said pairs, to use the stored count values, prior to selection of an acceptable combination in each cycle, to determine which of the said weighing machines (2) has performed the greatest number of article discharges and to cause that weighing machine (2) to be subjected to a zero-point adjustment during the current weighing cycle, whilst that machine is excluded from the group of weighing machines (2) to be used in that current weighing cycle, thereby ensuring that zero-point adjustment of a weighing machine (2) is carried out in each weighing cycle.

3. Apparatus as claimed in claim 1 or 2, wherein, when a weighing machine (2) is to be subjected to a zero-point adjustment, that weighing machine with which it is paired is also excluded from the group of weighing machines to be used by the combination control unit (5) in the cycle concerned.

4. Apparatus as claimed in claim 1, 2 or 3, wherein, if the acceptable combination selected in the immediately preceding weighing cycle included both weighing machines (2) of an individual pair thereof, then the said combination control unit (5) is operable in the next weighing cycle to attempt to select the said acceptable combination only from those combinations of weighing machines (2) which do not include both weighing machines (2) of any individual pair thereof.

## Patentansprüche

1. Computergestützte kombinatorische Wägvorrichtung zur wiederholten Durchführung eines Wägzyklus zum Schaffen jeweiliger gewählter Artikelmengen, mit

mehreren Wägmaschinen (2), die Artikel halten, während diese gewogen werden;

Zuführeinrichtungen (1), die zu wägende Artikel zeitweilig halten und Chargen dieser Artikel jeweils an die Wägmaschinen (2) ausgeben; und

einer Kombinations-Steuereinheit (5), die in jedem Wägzyklus jeweilige von einer Gruppe der Wägmaschinen (2) erzeugte Chargengewicht-Meßwerte kombiniert, um eine akzeptable Kombination der Wägmaschinen (2) zu wählen, die ein kombiniertes Gesamtgewicht von Artikeln halten, das einem vorgewählten Zielgewicht gleich ist oder am nächsten kommt, und die das Ausgeben der Artikelchargen

EP 0 161 068 B1

aus den zu der akzeptablen Kombination gehörenden Wägmaschinen (2) bewirkt, um dadurch die erforderliche gewählte Menge von Artikeln zu erhalten; wobei die Kombinations-Steuereinheit (5) so betreibbar ist, daß sie, nachdem die zu der gewählten akzeptablen Kombination gehörenden Wägmaschinen (2) ihre jeweiligen Artikelchargen ausgegeben haben, in dem nächsten Wägzyklus eine Nullpunkteinstellung einer zu den Wägmaschinen der gewählten akzeptablen Kombination gehörenden gewählten Wägmaschine (2) bewirken, die dadurch aus der von der Kombinations-Steuereinheit (5) in dem nächsten Wägzyklus zu verwendenden Gruppe von Wägmaschinen (2) ausgeschlossen wird;

dadurch gekennzeichnet, daß die Zuführeinrichtungen (1) einen Satz von Muldenbehältern aufweisen, die jeweils einzelnen Paaren der Wägmaschinen (2) zugeordnet und jeweils so betreibbar sind, daß sie eine Charge der Artikel wahlweise einer der Wägmaschinen des betreffenden Paares zuführen, und ferner dadurch gekennzeichnet, daß die Kombinations-Steuereinheit (5) derart ausgebildet ist, daß jede mögliche Kombination von Wägmaschinen, die mehr als eines der einzelnen Paare von Wägmaschinen enthält, in einem Wägzyklus von der Wahl als akzeptable Kombination ausgeschlossen wird, und falls die in einem Wägzyklus gewählte akzeptable Kombination eines der einzelnen Paare enthält, die zur Nullpunkteinstellung in dem nächsten Wägzyklus gewählte Wägmaschine (2) eine der Wägmaschinen (2) dieses Paars ist.

2. Vorrichtung nach Anspruch 1, bei der die Kombinations-Steuereinheit (5) mit einem Ausgabe-Zähler versehen ist, der so geschaltet und angeordnet ist, daß er für jede Wägmaschine (2) der genannten mehreren Wägmaschinen einen einzelnen Zählwert speichert, der die Häutigkeit angibt, in der die betreffende Wägmaschine eine Artikelcharge ausgeben hat, wobei die Kombinations-Steuereinheit (5) so betreibbar ist, daß sie, falls die in dem unmittelbar vorhergehenden Zyklus gewählte akzeptable Kombination nicht beide Wägmaschinen irgendeines Paares umfaßt hat, die gespeicherten Zählwerte vor der Wahl einer akzeptablen Kombination in jedem Zyklus verwendet, um zu bestimmen, welche der Wägmaschinen (2) die größte Anzahl von Artikelausgabevorgängen durchgeführt hat, und zu veranlassen, daß diese Wägmaschine (2) während des laufenden Wägzyklus einer Nullpunkteinstellung unterzogen wird, wobei diese Maschine aus der in dem laufenden Wägzyklus zu verwendenden Gruppe von Wägmaschinen (2) ausgeschlossen wird, wodurch gewährleistet ist, daß in jedem Wägzyklus eine Nullpunkteinstellung einer Wägmaschine (2) durchgeführt wird.

3. Vorrichtung nach Anspruch 1 oder 2, bei der, wenn eine Wägmaschine (2) einer Nullpunkteinstellung unterzogen werden soll, die mit dieser Wägmaschine gepaarte Wägmaschine auch aus der Gruppe von Wägmaschinen ausgeschlossen wird, die von der Kombinations-Steuereinheit (5) in dem betreffenden Zyklus verwendet werden soll.

4. Vorrichtung nach Anspruch 1, 2 oder 3, bei der, wenn die in dem unmittelbar vorhergehenden Wägzyklus gewählte akzeptable Kombination beide Wägmaschinen (2) eines einzelnen Paares von wägmaschinen umfaßt hat, die Kombinations-Steuereinheit (5) so betreibbar ist, daß sie in dem nächsten Wägzyklus anstrebt, die akzeptable Kombination nur aus den Kombinationen von Wägmaschinen (2) zu wählen, die nicht beide Wägmaschinen (2) irgendeines einzelnen Paares von Wägmaschinen umfaßt.

**Revendications**

1. Appareil de pesage combinatoire informatisé, pour effectuer de manière répétitive un cycle de pesage afin de réaliser des quantités respectives choisies d'objets, lequel appareil comprend:

une pluralité de machines de pesage (2) pour contenir des objets en train d'être pesés;

un moyen d'alimentation (1) pour contenir temporairement des objets à peser et fournir auxdites machines de pesage (2) des lots respectifs de ces objets; et

un dispositif (5) de détermiantion de combinaisons pour combiner, lors de chaque cycle de pesage, des mesures de poids respectifs de lots, fournies par un groupe desdites machines de pesage (2), afin de choisir une combinaison acceptable de ces machines de pesage (2) contenant un poids total combiné d'objets égal à un tout proche d'un poids visé préalablement choisi, et pour provoquer le déchargement des lots d'objets depuis les machines de pesage (2) appartenant à ladite combinaison acceptable, afin d'obtenir de ce fait la quantité choisie nécessaire d'objets, le dispositif (5) de détermination de combinaisons servant, après que les machines de pesage (2) appartenant à la combinaison acceptable choisie ont déchargé leurs lots respectifs d'objets, à provoquer un réglage du point zéro, lors du cycle de pesage suivant, d'une des machines de pesage choisie parmi celles de cette combinaison acceptable choisie, laquelle machine de pesage (2) est de ce fait exclue du groupe de machines de pesage (2) à utiliser par le dispositif (5) de détermination de combinaisons lors de ce cycle de pesage suivant;

caractérisé en ce que ledit moyen d'alimentation (1) comporte un ensemble de trémies collectrices, correspondant respectivement à des paires individuelles desdites machines de pesage (2), et servant chacune à fournir sélectivement un lot de ces objets à l'une ou l'autre des machines de pesage de la paire concernée, et caractérisé en outre en ce que ledit dispositif (5) de détermination de combinaisons est tel que toute combinaison possible de machines de pesage qui comprend au moins deux desdites paires individuelles de celles-ci est exclue, lors d'un cycle de pesage, du choix de ladite combinaison acceptable, et, si la combinaison acceptable choisie lors d'un cycle de pesage comprend l'une desdites paires individuelles, la machine de pesage (2) choisie pour le réglage du point zéro lors du cycle de pesage suivant est l'une des machines de pesage (2) de cette paire.

19

2. Appareil selon la revendication 1, dans lequel ledit dispositif (5) de détermination de combinaisons comporte un compteur de déchargements connecté et agencé pour stocker, pour chaque machine de pesage (2) de ladite pluralité, une valeur individuelle de comptage indiquant le nombre de fois où la machine de pesage concernée a déchargé un lot d'objets, ledit dispositif (5) de détermination de combinaisons servant, si la combinaison acceptable choisie lors du cycle immédiatement précédent n'a pas impliqué les deux machines de pesage de l'une quelconque desdites paires, à utiliser les valeurs de comptage stockées, avent le choix d'une combinaison acceptable lors de chaque cycle, afin de déterminer laquelle desdites machines de pesage (2) a effectué le plus grand nombre de déchargements d'objets et afin d'amener cette machine de pesage (2) a être soumise à un réglage de point zéro pendant le cycle de pesage en cours, cependant que cette machine est exclue du groupe de machines de pesage (2) à utiliser lors de ce cycle de pesage en cours, en assurant de ce fait que le réglage du point zéro d'une machine de pesage (2) est effectué à chaque cycle de pesage.

3. Appareil selon la revendication 1 ou 2, dans lequel, quand une machine de pesage (2) doit être soumise à un réglage du point zéro, la machine de pesage avec laquelle elle est appariée est elle aussi exclue du groupe de machines de pesage à utiliser, lors du cycle concerné, par le dispositif (5) de détermination de combinaisons.

4. Appareil selon la revendication 1, 2 ou 3, dans lequel, si la combinaison acceptable choisie lors du cycle de pesage immédiatement précédent a compris les deux machines de pesage (2) d'une paire individuelle de celles-ci, ledit dispositif de détermination de combinaisons (5) sert, lors du cycle de pesage suivant, à n'essayer de choisir ladite combinaison acceptable que d'après les combinaisons de machines de pesage (2) qui ne comprennent pas les deux machines de pesage (2) de l'une quelconque des paires individuelles de celles-ci.

Fig.1.

Fig.2.

Fig.3.

**Fig.4(a).**

| PAIRS | 1 | | 2 | | 3 | | 4 | | 5 | | 6 | |
|---|---|---|---|---|---|---|---|---|---|---|---|---|
| WEIGHING MACHINES | W1A | W1B | W2A | W2B | W3A | W3B | W4A | W4B | W5A | W5B | W6A | W6B |
| COMBINATION PATTERNS  a | 0 | 0 | 0 | 0 ③ | 0 | 0 ⑨ | 0 | 0 ㉗ | 0 | 0 ㉛ | 0 | 0 ㉔³ |
| b | 0 | 1 | 0 | 1 ③ | 0 | 1 ⑨ | 0 | 1 ㉗ | 0 | 1 ㉛ | 0 | 1 ㉔³ |
| c | 1 | 0 | 1 | 0 ③ | 1 | 0 ⑨ | 1 | 0 ㉗ | 1 | 0 ㉛ | 1 | 0 ㉔³ |
| d | 1 | 1 | 1 | 1 | 1 | 1 | 1 | 1 | 1 | 1 | 1 | 1 |

**Fig.4(b).**

| NUMBER OF COMBINATIONS / WEIGHING MACHINES PARTICIPATING IN COMBINATIONS | NO DOUBLING | ONE-PAIR DOUBLING | (NO DOUBLING)+ (ONE-PAIR DOUBLING) | TOTAL COMBI- NATIONS |
|---|---|---|---|---|
| 12 B | 728 | 1458 | 2186 | 4.095 |
| 10 B | 242 | 405 | 647 | 1023 |

$X_{1A}$ $X_{1B}$  $X_{2A}$ $X_{2B}$  $X_{6A}$ $X_{6B}$

(a) WEIGHT VALUE MEMORIES

$T_{1A}$ $T_{1B}$  $T_{2A}$ $T_{2B}$  $T_{6A}$ $T_{6B}$

(b) FLAGS PARTICIPATING IN COMBINATIONS

$G_{1A}$ $G_{1B}$  $G_{2A}$ $G_{2B}$  $G_{6A}$ $G_{6B}$

(c) DISCHARGE FLAGS

$F_{1A}$ $F_{1B}$  $F_{2A}$ $F_{2B}$  $F_{6A}$ $F_{6B}$

(d) FEED FLAGS

$Z_{1A}$ $Z_{1B}$  $Z_{2A}$ $Z_{2B}$  $Z_{6A}$ $Z_{6B}$

(e) ZERO-POINT ADJUSTMENT FLAGS

$Y_{1A}$ $Y_{1B}$  $Y_{2A}$ $Y_{2B}$  $Y_{6A}$ $Y_{6B}$

(f) ZERO-POINT ADJUSTMENT COUNTER MEMORIES

FIG.5.

4

EP 0 161 068 B1

START

① CLEAR ALL ZERO-POINT ADJUSTMENT COUNTERS Y TO ZERO.
② SET ALL ZERO-POINT ADJUSTMENT FLAGS Z AT "L"
③ SET ALL COMBINATION-PARTICIPATING FLAGS T AT "H"
*101*

Ⓐ

SET ALL DISCHARGE FLAGS G AND FEED FLAGS F AT "L"
*102*

TIMING SIGNAL — ABSENT
*103*

PRESENT

INPUT WEIGHT VALUES $X_{1A}, X_{1B}$ TO $X_{6A}, X_{6B}$
*104*

SEARCH COMBINATION-PARTICIPATING FLAGS T TO DETERMINE WEIGHING MACHINES PARTICIPATING IN COMBINATORIAL COMPUTATION.
*105*

FORM COMBINATION PATTERNS BY WEIGHING MACHINES DETERMINED
*106*

IS NO DOUBLING OR ONE-PAIR DOUBLING ? — NO
*107*

YES

COMBINATORIAL COMPUTATIONS
*108*

ARE PATTERNS COMPLETED ? — NO
*109*

YES

*FIG. 6 (⅓)*

*110*

ABSENT ⟵ OPTIMUM COMBINATION

PRESENT

*114*

SET FEED FLAGS F AND COMBINATION-PARTICIPATING FLAGS T OF WEIGHING MACHINES OF A PREDETERMINED OR SMALLER WEIGHT AT "H" (EXCEPTING WEIGHING MACHINES OF ZERO-POINT ADJUSTMENT FLAGS Z OF "H". SET FLAGS F AND T OF ONE WEIGHING MACHINE AT "H" IN CASE BOTH MACHINES OF ONE PAIR ARE SMALLER THAN THE PREDETERMINED WEIGHT)

*111*

SET DISCHARGE FLAGS G AND FEED FLAGS F AT "H" AND FEED FLAGS HAVING COMBINATION-PARTICIPATING FLAGS T OF "L" AT "H" IN ACCORDANCE WITH PATTERN OF OPTIMUM COMBINATION

*112*

OUTPUT WEIGHING HOPPER OPENING SIGNALS AND INCREMENT ZERO-POINT ADJUSTMENT COUNTERS Y BY +1 IN ACCORDANCE WITH "H" OF DISCHARGE FLAGS G

Ⓑ

*113*

SET ALL COMBINATION-PARTICIPATING FLAGS T AT "H"

*115*

NO ⟵ ARE ZERO-POINT ADJUSTMENT FLAGS Z AT "H" ?

YES

*116*

EXECUTE ZERO-POINT ADJUSTMENT OF WEIGHING MACHINES HAVING ZERO-POINT ADJUSTMENT FLAGS Z OF "H"

*117*

SET ZERO-POINT ADJUSTMENT FLAGS Z OF WEIGHING MACHINES HAVING EXECUTED THE ZERO-POINT ADJUSTMENT OF "L"

*FIG. 6 (²/₃)*

```
                    ┌─────────────┐ 118
         ABSENT     │  DOUBLING   │
  ◄──────────────── │ OF DISCHARGE│
                    │   FLAGS G   │
                    └─────────────┘
                         │ PRESENT
                    ┌─────────────────────────────────┐ 119
                    │ SET ZERO-POINT ADJUSTMENT FLAG Z │
                    │ OF THAT WEIGHING MACHINE OF      │
                    │ DOUBLED PAIR, WHICH HAS LARGER   │
                    │ COUNTED VALUE OF ZERO-POINT      │
                    │ ADJUSTMENT COUNTERS Y, AT "H"    │
                    └─────────────────────────────────┘
                    ┌─────────────────────────────────┐ 120
                    │ CLEAR ZERO-POINT ADJUSTMENT      │
                    │ COUNTERS Y HAVING ZERO-POINT     │
                    │ ADJUSTMENT FLAGS OF "H" TO ZERO, │
                    │ AND SET FEED FLAGS F OF THE      │
                    │ SAME AT "L"                      │
                    └─────────────────────────────────┘
                    ┌─────────────────────────────────┐ 121
                    │ SET COMBINATION-PARTICIPATING    │
                    │ FLAGS OF ZERO-POINT ADJUSTMENT   │
    (B)             │ FLAGS OF "H" AT "L"              │
                    └─────────────────────────────────┘
```

SET ZERO-POINT ADJUSTMENT FLAG Z OF THAT WEIGHING MACHINE OF DOUBLED PAIR, WHICH HAS LARGER COUNTED VALUE OF ZERO-POINT ADJUSTMENT COUNTERS Y, AT "H"

CLEAR ZERO-POINT ADJUSTMENT COUNTERS Y HAVING ZERO-POINT ADJUSTMENT FLAGS OF "H" TO ZERO, AND SET FEED FLAGS F OF THE SAME AT "L"

SET COMBINATION-PARTICIPATING FLAGS OF ZERO-POINT ADJUSTMENT FLAGS OF "H" AT "L"

SEARCH FEED FLAGS F IN PAIR (OR READ THEM IN PAIR FOR EACH LOOP) — 122

CHECK FEED FLAGS $F_{iA}$ AND $F_{iB}$ — 123

$F_{iA} = \ulcorner H \lrcorner$   $F_{iB} = \ulcorner H \lrcorner$   $F_{iA} = F_{iB} = \ulcorner H \lrcorner$   $F_{iA} = F_{iB} = L$

124 — OUTPUT A-SIDE GATE OPENING SIGNAL $P_{iA}$ OF POOL HOPPER $P_i$

125 — OUTPUT B-SIDE GATE OPENING SIGNAL $P_{iB}$ OF POOL HOPPER $P_i$

126 — OUTPUT A-SIDE GATE OPENING SIGNAL $P_{iA}$ OF POOL HOPPER $P_i$

127 — SET B-SIDE COMBINATION-PARTICIPATING FLAG $T_{iB}$ AT "L"

128 — IS SEARCH OF FEED FLAGS COMPLETED ?   NO / YES

(A)

*FIG.6 (3/3)*

EP 0 161 068 B1

Fig.7.

8

EP 0 161 068 B1

FIG.8 (1/4)

Flowchart:

START

201
① CLEAR ALL ZERO-POINT ADJUSTMENT COUNTERS Y TO ZERO
② SET ALL ZERO-POINT ADJUSTMENT FLAGS Z AT "L"
③ SET ALL COMBINATION-PARTICIPATING FLAGS T AT "H"

(A)

202
SET ALL DISCHARGE FLAGS G AND FEED FLAGS F AT "L"

203
TIMING SIGNAL — ABSENT / PRESENT

204
INPUT WEIGHT VALUES $X_{1A}$, $X_{1B}$ TO $X_{6A}$, $X_{6B}$

205
SEARCH COMBINATION-PARTICIPATING FLAGS T TO DETERMINE WEIGHING MACHINES PARTICIPATING IN COMBINATORIAL COMPUTATION

206
FORM COMBINATORIAL PATTERNS BY WEIGHING MACHINES DETERMINED

207
IS DOUBLING ? — NO / YES

208
COMBINATORIAL COMPUTATIONS

209
ARE PATTERNS COMPLETED ? — NO / YES

9

FIG.8 (²/₄)

FIG.8 (3/4)

11

*1                                                    *2

227
SEARCH FEED FLAGS F
IN PAIR (OR READ
THEM IN PAIR FOR
EACH LOOP)

228
$F_{iA} = {}^rH_J$          CHECK          $F_{iA} = F_{iB} = {}^rL_J$
                    FEED FLAGS
                $F_{iA}$ AND $F_{iB}$

                        $F_{iB} = {}^rH_J$  230
229
OUTPUT A-SIDE GATE          OUTPUT B-SIDE GATE
OPENING SIGNAL $P_{iA}$     OPENING SIGNAL $P_{iB}$
OF POOL HOPPER $P_i$        OF POOL HOPPER $P_i$

                        231
                    IS
                SEARCH OF
                FEED FLAGS          NO
                COMPLETED
                    ?

                    YES

                    A

FIG. 8 (4/4)

12

| EMBODIMENTS | COMBINATORIAL COMPUTATION | DISCHARGE | SELECTION OF ZERO-POINT ADJUSTMENT WEIGHING MACHINES | NONPARTICIPATION IN COMBINATORIAL COMPUTATION |
|---|---|---|---|---|
| (I) | COMBINATORIAL COMPUTATION WITHOUT DOUBLING AND WITH ONE-PAIR DOUBLING | DISCHARGE WITHOUT DOUBLING — DISCHARGE WITH DOUBLING | SELECT ZERO-POINT ADJUSTMENT ONE FROM DOUBLED WEIGHING MACHINES | NONPARTICIPATION OF SELECTED WEIGHING MACHINE IN COMBINATORIAL COMPUTATION |
| (II) | COMBINATORIAL COMPUTATION WITHOUT DOUBLING — COMBINATORIAL COMPUTATION WITH ONE-PAIR DOUBLING | DISCHARGE WITHOUT DOUBLING — DISCHARGE WITH DOUBLING | SELECT ZERO-POINT ADJUSTMENT ONE FROM DOUBLED WEIGHING MACHINES | NONPARTICIPATION OF BOTH SELECTED WEIGHING MACHINE AND THE OTHER WEIGHING MACHINE IN THE PAIR IN COMBINATORIAL COMPUTATION |
| (III) | COMBINATORIAL COMPUTATION WITHOUT DOUBLING AND WITH ONE-PAIR DOUBLING | DISCHARGE WITHOUT DOUBLING — DISCHARGE WITH DOUBLING | SELECT ZERO-POINT ADJUSTMENT ONE FROM DOUBLED WEIGHING MACHINES | NONPARTICIPATION OF BOTH SELECTED WEIGHING MACHINE AND THE OTHER WEIGHING MACHINE IN THE PAIR IN COMBINATORIAL COMPUTATION |

FIG.9

| ITEMS / EMBODIMENTS | COMBINATORIAL COMPUTATION | WEIGHING MACHINES NONPARTICIPATING INTO COMBINATION | NUMBER OF MACHINES PARTICIPATING INTO COMBINATION | ZERO-POINT ADJUSTMENT |
|---|---|---|---|---|
| (I) | NO DOUBLING AND ONE-PAIR DOUBLING | ONE ZERO-POINT ADJUSTMENT MACHINE | UNSPECIFIED | SUBSEQUENT TO DISCHARGE WITH DOUBLING |
| (II) | NO DOUBLING AND THEN WITH ONE-PAIR DOUBLING | ONE PAIR OF (i.e., TWO) ZERO-POINT ADJUSTMENT MACHINES | SPECIFIED (10 OR 12 MACHINES) | SUBSEQUENT TO DISCHARGE WITH DOUBLING |
| (III) | NO DOUBLING AND THEN WITH ONE-PAIR DOUBLING | ONE PAIR OF (i.e., TWO) ZERO-POINT ADJUSTMENT MACHINES | SPECIFIED (10 OR 12 MACHINES) | SUBSEQUENT TO DISCHARGE WITH DOUBLING |

*Fig.10.*

Fig.11.

START

*301*

① CLEAR ALL ZERO-POINT ADJUSTMENT COUNTERS Y TO ZERO
② SET ALL ZERO-POINT ADJUSTMENT FLAGS Z AT "L"
③ SET ALL COMBINATION-PARTICIPATING FLAGS $T_{1A}$ - $T_{5B}$ AT "H"

Ⓐ

*302*

SET ALL DISCHARGE FLAGS G AND FEED FLAGS F AT "L"

*303*

ABSENT ← TIMING SIGNAL

PRESENT

*304*

INPUT WEIGHT VALUES $X_{1A}$, $X_{1B}$ TO $X_{6A}$, $X_{6B}$

*305*

SEARCH COMBINATION-PARTICIPATING FLAGS T TO DETERMINE WEIGHING MACHINES PARTICIPATING IN COMBINATORIAL COMPUTATION

*306*

FORM COMBINATORIAL PATTERNS BY WEIGHING MACHINES DETERMINED

*307*

IS NO DOUBLING OR ONE-PAIR DOUBLING ?
NO ←
YES

*308*

COMBINATORIAL COMPUTATIONS

*309*

ARE PATTERNS COMPLETED ?
NO ←
YES

FIG./2 (⅓)

16

*310*

**OPTIMUM COMBINATION**

ABSENT ← ⬦ → PRESENT

*314*

**SET FEED FLAGS OF WEIGHING MACHINES OF A PREDETERMINED OR SMALLER WEIGHT AT "H"(EXCEPTING WEIGHING MACHINES OF COMBINATION-PARTICIPATING FLAGS T OF "L". SET FLAGS OF ONE WEIGHING MACHINE AT "H" IN CASE BOTH MACHINES OF ONE PAIR ARE SMALLER THAT THE PREDETERMINED WEIGHT)**

*311*

**SET DISCHARGE FLAGS G AND FEED FLAGS F AT "H" AND FEED FLAGS HAVING COMBINATION-PARTICIPATING FLAGS T OF "L"AT"H" AND FEED FLAGS OF COMBINATION-PARTICIPATING FLAGS T OF "L"AT "H"RESPECTIVELY, IN ACCORDANCE WITH PATTERN OF OPTIMUM COMBINATION**

*312*

**OUTPUT WEIGHING HOPPER OPENING SIGNALS IN ACCORDANCE-WITH "H" OF DISCHARGE FLAGS G**

*313*

**SET ALL COMBINATION-PARTICIPATING FLAGS T AT "H", AND INCREMENT ALL ZERO-POINT ADJUSTMENT COUNTERS Y BY +1**

Ⓑ

*315*

**ARE ZERO-POINT ADJUSTMENT FLAGS Z AT "H" ?**

NO ← ⬦ → YES

*316*

**EXECUTE ZERO-POINT ADJUSTMENT OF WEIGHING MACHINES HAVING ZERO-POINT ADJUSTMENT FLAGS Z OF "H"**

*317*

**SET FEED FLAGS F AND ZERO-POINT ADJUSTMENT FLAGS Z OF WEIGHING MACHINES HAVING EXECUTED THE ZERO-POINT ADJUSTMENT AT "H" AND "L" RESPECTIVELY**

Ⓒ

*FIG. 12 (2/3)*

*318*

**DOUBLING OF DISCHARGE FLAGS G**

ABSENT ← / PRESENT ↓

*320*

**SET ZERO-POINT ADJUSTMENT FLAG Z OF THAT WEIGHING MACHINE OF IN DISCHARGE FLAGS G OF "H", WHICH HAS THE MAXIMUM COUNTED VALUE OF ZERO-POINT ADJUSTMENT COUNTERS Y, AT "H"**

*319*

**SET ZERO-POINT ADJUSTMENT FLAG Z OF THAT WEIGHING MACHINE OF DOUBLED PAIR, WHICH HAS LARGER COUNTED VALUE OF ZERO-POINT ADJUSTMENT COUNTERS Y, AT "H"**

*321*

**CLEAR ZERO-POINT ADJUSTMENT COUNTERS Y HAVING ZERO-POINT ADJUSTMENT FLAGS OF "H" TO ZERO, AND SET FEED FLAGS F OF THE SAME AT "L"**

*322*

**SET BOTH COMBINATION – PARTICIPATING FLAGS OF PAIR OF ZERO-POINT ADJUSTMENT FLAGS OF "H" AT "L"**

Ⓒ

*323*

**SEARCH FEED FLAGS F IN PAIR (READ THEM IN PAIR FOR EACH LOOP)**

*324*

**CHECK FEED FLAGS $F_{iA}$ AND $F_{iB}$**

$F_{iA}$ ="H" ← / → $F_{iB}$ ="H"

*326*

**OUTPUT A-SIDE GATE OPENING SIGNAL $P_{iA}$ OF POOL HOPPER $P_i$**

*325*

**OUTPUT B-SIDE GATE OPENING SIGNAL $P_{iA}$ OF POOL HOPPER $P_i$**

*327*

**IS SEARCH OF FEED FLAGS COMPLETED ?**

NO → / YES ↓

Ⓐ

*FIG.12 (3/3)*

| EMBODIMENT | COMBINATORIAL COMPUTATION | DISCHARGE | SELECTION OF ZERO-POINT ADJUSTMENT WEIGHING MACHINES | NONPARTICIPATION IN COMBINATORIAL COMPUTATION |
|---|---|---|---|---|
| (IV) | COMBINATORIAL COMPUTATION WITHOUT DOUBLING AND WITH ONE PAIR DOUBLING | DISCHARGE WITHOUT DOUBLING<br><br>DISCHARGE WITH DOUBLING | SELECT ZERO-POINT ADJUSTMENT ONE FROM DISCHARGED WEIGHING MACHINES<br><br>SELECT ZERO-POINT ADJUSTMENT ONE FROM DOUBLED WEIGHING MACHINES | NONPARTICIPATION OF BOTH SELECTED WEIGHING MACHINE AND THE OTHER WEIGHING MACHINES IN THE PAIR IN COMBINATORIAL COMPUTATION |

FIG.13.

| ITEMS<br>EMBODIMENT | COMBINATORIAL COMPUTATION | WEIGHING MACHINES NONPARTICIPATING INTO COMBINATION | NUMBER OF MACHINES PARTICIPATING INTO COMBINATION | ZERO-POINT ADJUSTMENT |
|---|---|---|---|---|
| (IV) | NO DOUBLING AND ONE-PAIR DOUBLING | ONE PAIR OF (i.e.,TWO) ZERO-POINT ADJUSTMENT MACHINES | SPECIFIED (10) | EACH TRIAL |

FIG.14.

EP 0 161 068 B1

$W_{1A}$ $W_{1B}$  $W_{2A}$ $W_{2B}$  $W_{3A}$ $W_{3B}$  $W_{4A}$ $W_{4B}$  $W_{5A}$ $W_{5B}$  $W_{6A}$ $W_{6B}$

NONPARTICIPATION IN COMBINATION

(a)

(OPTIMUM COMBINATION)

DISCHARGE

FEED

EXECUTION OF ZERO-POINT ADJUSTMENT

(b)

DISCHARGE

FEED

ZERO-POINT ADJUSTMENT FLAG AT "H"

NONPARTICIPATION IN COMBINATION

(c)

EXECUTION OF ZERO-POINT ADJUSTMENT

DISCHARGE

FEED

NONPARTICIPATION IN COMBINATION

(d)

DISCHARGE

FEED

ZERO-POINT ADJUSTMENT FLAG AT "H"

NONPARTICIPATION IN COMBINATION

NONPARTICIPATION IN COMBINATION

(e)

EXECUTION OF ZERO-POINT ADJUSTMENT

DISCHARGE

FEED

Fig.15(1/2).

20

FIG.15(2/2).

(a) WEIGHING MEMORIES — $W_{1A}$ $W_{1B}$, $W_{2A}$ $W_{2B}$ — $W_{6A}$ $W_{6B}$

(b) FLAGS PARTICIPATING IN COMBINATIONS — $T_{1A}$ $T_{1B}$, $T_{2A}$ $T_{2B}$ — $T_{6A}$ $T_{6B}$

(c) DISCHARGE FLAGS — $G_{1A}$ $G_{1B}$, $G_{2A}$ $G_{2B}$ — $G_{6A}$ $G_{6B}$

(d) FEED FLAGS — $F_{1A}$ $F_{1B}$, $F_{2A}$ $F_{2B}$ — $F_{6A}$ $F_{6B}$

(e) ZERO-POINT ADJUSTMENT FLAGS — $Z_{1A}$ $Z_{1B}$, $Z_{2A}$ $Z_{2B}$ — $Z_{6A}$ $Z_{6B}$

(f) ZERO-POINT ADJUSTMENT COUNTERS — $Y_{1A}$ $Y_{1B}$, $Y_{2A}$ $Y_{2B}$ — $Y_{6A}$ $Y_{6B}$

(g) DOUBLING DISCHARGE FLAG — $E$

Fig.16.

START

401

① CLEAR ALL ZERO-POINT ADJUSTMENT
   COUNTERS Y TO ZERO
② SET ALL ZERO-POINT ADJUSTMENT
   FLAGS Z AT "L"
③ SET ALL COMBINATION-PARTICIPATING
   FLAGS T AT "H"
④ SET DOUBLING DISCHARGE FLAG
   E AT "L"

Ⓐ

402

SET ALL DISCHARGE FLAGS G
AND FEED FLAGS F AT "L"

403

ABSENT ◁ TIMING
         SIGNAL

PRESENT

404

INPUT WEIGHT VALUES $X_{1A}, X_{1B}$
TO $X_{6A}, X_{6B}$

405

SEARCH COMBINATION-PARTICIPATING
FLAGS T TO DETERMINE WEIGHING
MACHINES PARTICIPATING IN
COMBINATORIAL COMPUTATION

FIG. 17 (¼)

23

$r_{HJ}$ (PREVIOUS DOUBLING DISCHARGE)

*406* DOUBLING DISCHARGE FLAG

$r_{LJ}$

*411* FORM COMBINATORIAL PATTERNS BY WEIGHING MACHINES DETERMINED

*407* FORM COMBINATORIAL PATTERNS BY WEIGHING MACHINES DETERMINED

*412* NO DOUBLING ? — NO

*408* IS NO DOUBLING OR ONE-PAIR DOUBLING ? — NO

YES

YES

*413* COMBINATORIAL COMPUTATIONS

*409* COMBINATORIAL COMPUTATIONS

*414* ARE PATTERNS COMPLETED ? — NO

*410* ARE PATTERNS COMPLETED ? — NO

YES

YES

*415* SET DOUBLING DISCHARGE FLAG E AT "L"

*416* OPTIMUM COMBINATION

ABSENT

PRESENT

*417* SET DISCHARGE FLAGS G AND FEED FLAGS F AT "H" AND FEED FLAGS HAVING COMBINATION-PARTICIPATING FLAGS T OF "L" AT "H" IN ACCORDANCE WITH PATTERN OF OPTIMUM COMBINATION

※1

※2

*FIG. 17 (²/₄)*

*420* ※1

SET FEED FLAGS F AND COMBINATION-PARTICIPATING FLAGS T OF WEIGHING MACHINES OF A PREDETERMINED OR SMALLER WEIGHT AT "H" (EXCEPTING WEIGHING MACHINES OF ZERO-POINT ADJUSTMENT FLAGS Z OF "H". SET FLAGS F AND T OF ONE WEIGHING MACHINE AT "H" IN CASE BOTH MACHINES OF ONE PAIR ARE SMALLER THAN THE PREDETERMINED WEIGHT)

C

*418* ※2

OUTPUT WEIGHING HOPPER OPENING SIGNALS AND INCREMENT ZERO-POINT ADJUSTMENT COUNTERS Y BY +1 IN ACCORDANCE WITH "H" OF DISCHARGE FLAGS G

SET ALL COMBINATION-PARTICIPATING FLAGS T AT "H"

*419*

B

B

*421* ARE ZERO-POINT ADJUSTMENT FLAGS Z AT "L"

NO

YES

*422* EXECUTE ZERO-POINT ADJUSTMENT OF WEIGHING MACHINES HAVING ZERO-POINT ADJUSTMENT FLAGS Z OF "H"

*423* SET ZERO-POINT ADJUSTMENT FLAGS Z OF WEIGHING MACHINES HAVING EXECUTED THE ZERO-POINT ADJUSTMENT AT "L"

*424* DOUBLING OF DISCHARGE FLAGS G

ABSENT

PRESENT

*425* SET DOUBLING DISCHARGE FLAG E AT "H"

*426* SET ZERO-POINT ADJUSTMENT FLAG Z OF THAT WEIGHING MACHINE OF DOUBLED PAIR, WHICH HAS LARGER COUNTED VALUE OF ZERO-POINT ADJUSTMENT COUNTERS Y, AT "H"

※3       *FIG. 17 (¾)*       ※4

※3          ※4

```
┌─────────────────────────────────┐  427
│ CLEAR ZERO-POINT ADJUSTMENT      │
│ COUNTERS Y HAVING ZERO-POINT     │
│ ADJUSTMENT FLAGS OF "H" TO ZERO, │
│ AND SET FEED FLAGS F OF THE      │
│ SAME AT "L"                      │
└─────────────────────────────────┘

┌─────────────────────────────────┐  428
│ SET COMBINATION-PARTICIPATING    │
│ FLAGS OF ZERO-POINT              │
│ ADJUSTMENT FLAGS OF "H" AT "L"   │
└─────────────────────────────────┘
```

(C)

```
┌─────────────────────────────────┐  429
│ SEARCH FEED FLAGS F IN PAIR      │
│ (OR READ THEM IN PAIR FOR        │
│ EACH LOOP)                       │
└─────────────────────────────────┘
```

CHECK FEED FLAGS $F_{iA}$ AND $F_{iB}$    430

$F_{iA} = \ulcorner H \lrcorner$    $F_{iB} = \ulcorner H \lrcorner$    $F_{iA} = F_{iB} = \ulcorner H \lrcorner$    $F_{iA} = F_{iB} = \ulcorner L \lrcorner$

```
431                        432                        433
┌──────────────────┐  ┌──────────────────┐  ┌──────────────────┐
│ OUTPUT A-SIDE GATE│  │OUTPUT B-SIDE GATE│  │ OUTPUT A-SIDE GATE│
│ OPENING SIGNAL    │  │OPENING SIGNAL    │  │ OPENING SIGNAL    │
│ P_{iA} OF POOL HOPPER│ │P_{iB} OF POOL HOPPER│ │ P_{iA} OF POOL HOPPER│
│ P_i               │  │ P_i              │  │ P_i               │
└──────────────────┘  └──────────────────┘  └──────────────────┘
```

$P_{iA}$ OF POOL HOPPER $P_i$    $P_{iB}$ OF POOL HOPPER $P_i$    $P_{iA}$ OF POOL HOPPER $P_i$

```
                              434  ┌──────────────────┐
                                   │ SET B-SIDE        │
                                   │ COMBINATION-      │
                                   │ PARTICIPATING     │
                                   │ FLAG T_{iB} AT "L"│
                                   └──────────────────┘
```

435    IS SEARCH OF FEED FLAGS COMPLETED ?    NO

YES

(A)

*FIG. 17 (⁴⁄₄)*

EP 0 161 068 B1

FIG. 18.

| EMBODIMENTS | COMBINATORIAL COMPUTATION | | DISCHARGE | SELECTION OF ZERO-POINT ADJUSTMENT WEIGHING MACHINES | NONPARTICIPATION IN COMBINATORIAL COMPUTATION |
|---|---|---|---|---|---|
| (V) | PREVIOUS DISCHARGE — WITHOUT DOUBLING | COMBINATORIAL COMPUTATION WITHOUT DOUBLING AND WITH ONE-PAIR DOUBLING | DISCHARGE WITHOUT DOUBLING | | |
| | | | DISCHARGE WITH DOUBLING | SELECT ZERO-POINT ADJUSTMENT ONE FROM DOUBLED WEIGHING MACHINES | NONPARTICIPATION OF SELECTED WEIGHING MACHINE IN COMBINATORIAL COMPUTATION |
| | WITH DOUBLING | COMBINATORIAL COMPUTATION WITHOUT DOUBLING (i.e. NONPARTICIPATION OF ONE WEIGHING MACHINE INTO COMBINATION) | DISCHARGE WITHOUT DOUBLING | | |
| (VI) | PREVIOUS DISCHARGE — WITHOUT DOUBLING | COMBINATORIAL COMPUTATION WITHOUT DOUBLING AND WITH ONE-PAIR DOUBLING | DISCHARGE WITHOUT DOUBLING | | |
| | | | DISCHARGE WITH DOUBLING | SELECT ZERO-POINT ADJUSTMENT ONE FROM DOUBLED WEIGHING MACHINES | NONPARTICIPATION OF BOTH SELECTED WEIGHING MACHINE AND THE OTHER WEIGHING MACHINE IN THE PAIR IN COMBINATORIAL COMPUTATION |
| | WITH DOUBLING | COMBINATORIAL COMPUTATION WITHOUT DOUBLING (i.e. NONPARTICIPATION OF TWO WEIGHING MACHINES OF ONE PAIR INTO COMBINATION) | DISCHARGE WITHOUT DOUBLING | | |

Fig.19

EP 0 161 068 B1

| ITEMS / EMBODIMENTS | COMBINATORIAL COMPUTATION | WEIGHING MACHINES NONPARTICIPATING INTO COMBINATION | NUMBER OF MACHINES PARTICIPATING INTO COMBINATION | ZERO-POINT ADJUSTMENT |
|---|---|---|---|---|
| (V) | NO DOUBLING AND ONE-PAIR DOUBLING FOR NO PREVIOUS DOUBLING DISCHARGE | ONE ZERO-POINT ADJUSTMENT MACHINE | UNSPECIFIED | SUBSEQUENT TO DISCHARGE WITH DOUBLING |
| (VI) | NO DOUBLING AND ONE-PAIR DOUBLING FOR NO PREVIOUS DOUBLING DISCHARGE | ONE PAIR OF (i.e., TWO) ZERO-POINT ADJUSTMENT MACHINES | SPECIFIED (10 OR 12 MACHINES) | SUBSEQUENT TO DISCHARGE WITH DOUBLING |

FIG.20.